# EUROPEAN PATENT SPECIFICATION

(11) **EP 3 974 301 B1**
(45) Date of publication and mention of the grant of the patent: **29.05.2024**
(21) Application number: 21191851.1
(22) Date of filing: 18.08.2021
(51) Int. Cl.: B62J 9/14, B62K 19/30

(54) **STRADDLED VEHICLE**
GRÄTSCHSITZFAHRZEUG
VÉHICULE À ENFOURCHER

(30) Priority: 25.09.2020 JP 2020160871
(43) Date of publication of application: 30.03.2022
(73) Proprietor: Yamaha Hatsudoki Kabushiki Kaisha, Iwata-shi, Shizuoka-ken 438-8501 (JP)
(72) Inventor: SUGAWARA, Kohei, Shizuoka-ken, 438-8501 (JP)
(74) Representative: Marks & Clerk LLP

(56) References cited:
- EP-A1- 3 689 725
- CN-C- 1 165 445
- JP-A- 2008 094 160

## Description

### FIELD OF INVENTION

The present invention relates generally to a straddled vehicle, and in particular, though not exclusively, to a straddled vehicle having cases for storing electrical components.

### BACKGROUND TO INVENTION

Document EP 3 689 725 A1 shows the preamble of claim 1.

Japanese Unexamined Patent Publication No. 2009-78795 (YAMAHA MOTOR CO LTD) discloses a straddled vehicle. A description will be made hereunder showing, in parentheses, the same reference signs as used in the above publication. The straddled vehicle (1) includes a right seat frame (21R), a left seat frame (21L), seats (7, 9), a case (40), and a battery (60). The case (40) is disposed leftward of the right seat frame (21R), rightward of the left seat frame (21L), and below the seats (7, 9). The case (40) is formed integral. The battery (60) is stored in the case (40).

A battery is one of the electrical components. In recent years, the number of electrical components mounted on a straddled vehicle has been on the increase. This has required an increase in the cost of designing an arrangement of each electrical component. Further, the case for storing each electrical component has increased in size. This has increased the case manufacturing cost.

This invention has been made having regard to the state of the art noted above, and its object is to provide a straddled vehicle that allows efficient designing of an arrangement of electrical components, and curbing of the manufacturing cost of cases for storing the electrical components.

The Inventor herein notes the following points. Different types of straddled vehicles may have seat frames of different lengths in the vehicle's longitudinal direction. The case is disposed between a right seat frame and a left seat frame. The case, therefore, has shapes different between different types of straddled vehicles having seat frames of different lengths. Consequently, plural types of cases having different shapes are prepared, respectively, for the plural types of straddled vehicles having the seat frames of different lengths. For example, plural types of forming dies are manufactured for the plural types of cases, respectively. Further, the plural types of cases are manufactured using the respective forming dies.

The arrangement of each electrical component stored in the case is different between the plural types of cases having different shapes. The arrangement of each electrical component is designed for each case having a different shape.

Based on the above findings, the Inventor herein has studied how to curb the cost of manufacturing plural types of cases having different shapes. Further, based on the above findings, the Inventor has studied how to realize labor-saving in the operation to design an arrangement of electrical components for each type of case.

It is an object of at least one embodiment of at least one aspect of the present invention to seek to obviate or at least mitigate one or more problems and/or disadvantages in the prior art.

### SUMMARY OF INVENTION

The subject matter of the invention is defined by independent claim 1

Consequently, the length in the vehicle's longitudinal direction of the entirety of the first case and second case may be changed easily by changing the shape of the second case without changing the shape of the first case. Here, "changing the shape of the second case" may be, for example, preparing plural types of second cases different in shape and switching between the plural types of second cases. Thus, the first case and second case may be easily applicable to plural types of straddled vehicles with the right seat frame and left seat frame having different lengths in the vehicle's longitudinal direction. The first case having the same shape may be easily applicable to plural types of straddled vehicles with the right seat frame and left seat frame having different lengths in the vehicle's longitudinal direction. That is, the first case may be easily shared between plural types of straddled vehicles with the right seat frame and left seat frame having different lengths in the vehicle's longitudinal direction.

When the first case is shared between plural types of straddled vehicles, the manufacturing cost of the first case may be reduced effectively. The volume of the second case may be smaller than the volume of the first case. So, even when plural types of second cases different in shape are prepared, the manufacturing cost of the second cases may be kept down not to become excessively high. Thus, by changing the shape of the second case, without changing the shape of the first case, the overall manufacturing cost of the first case and second case may be conveniently kept down.

The first case may store a plurality of first electrical components. The second case may store a plurality of second electrical components. Consequently, when changing the shape of the second case, without changing the shape of the first case, it may be sufficient to design only an arrangement of the second electrical components. This may enable an effective reduction of the cost of designing the arrangement of the first electrical components. Further, the volume of the second case may be smaller than the volume of the first case. Even when the shape of the second case is changed, the arrangement of the second electrical components may be designed easily. Thus, by changing the shape of the second case, without changing the shape of the first case, the overall arrangement of the first electrical components and second electrical components may be efficiently designed.

The first electrical components may comprise a battery and a hydraulic unit. The battery and hydraulic unit may be stored in the first case. Here, the shape of the battery cannot change easily between plural types of straddled vehicles. The shape of the hydraulic unit cannot change easily between plural types of straddled vehicles. Consequently, the cost of designing an arrangement of the battery and hydraulic unit may be reduced with increased effect. The second electrical components may comprise a first connector. The first connector may be stored in the second case. The arrangement of the first connector may therefore be designed easily. Here, the shape of the first connector may be easily changeable between plural types of straddled vehicles. Thus, the arrangement of the first connector may be designed flexibly according to various shapes of the first connector. This may enable an efficient designing of the arrangement of the battery, and/or hydraulic unit, and/or first connector.

According to this straddled vehicle, as described above, the manufacturing cost of the first case and second case may be held down. Further, the arrangement of the first electrical components and second electrical components may be designed efficiently.

When the first case and second case are optionally applied to plural types of straddled vehicles with different lengths in the vehicle's longitudinal direction of the right seat frame and left seat frame, the manufacturing cost of the first case and second case may be further held down, and the arrangement of the first electrical components and second electrical components may be designed with increased efficiency.

In the above straddled vehicle, the second case may have a length in a vehicle's up-down direction smaller than a length in the vehicle's up-down direction of the first case.

Even when plural types of second cases different in shape are prepared, it may be possible to keep down the manufacturing cost of the second cases so as not to become excessively high. By changing the shape of the second case, without changing the shape of the first case, the overall manufacturing cost of the first case and second case may be kept down with increased effect.

In the above straddled vehicle, it may be preferred that the second case has a length in the vehicle's longitudinal direction corresponding to or smaller than a length in the vehicle's longitudinal direction of the first case.

Even when plural types of second cases different in shape are prepared, it may be possible to keep down the manufacturing cost of the second cases so as not to become excessively high. By changing the shape of the second case, without changing the shape of the first case, the overall manufacturing cost of the first case and second case may be kept down with increased effect.

In the above straddled vehicle, it may be preferred that the battery and the hydraulic unit are arranged to align in the vehicle's longitudinal direction in the plan view of the vehicle.

This may conveniently prevent the length in a vehicle's transverse direction of the first case from becoming excessively large. The first case may therefore easily be located leftward of the right seat frame and rightward of the left seat frame. Further, the length in the vehicle's up-down direction of the first case may conveniently be prevented from becoming excessively large. The first case may therefore easily be located below the seat.

In the above straddled vehicle, the first case may comprise one or more of;
a front portion;
a middle portion which may be located behind the front portion; and
a rear portion which may be located behind the middle portion;

the middle portion may have a depth larger than a depth of the front portion and a depth of the rear portion; and/or
the battery may be stored in the middle portion.

The first case may be divided into the front portion, middle portion, and rear portion. The battery may be stored in the middle portion. Here, the depth of the middle portion may be larger than the depth of the front portion and/or the depth of the rear portion. Therefore, even when the battery is relatively large, the middle portion may conveniently store the battery.

The above straddled vehicle may comprise a bracket disposed below the first case and in contact with the first case.

The bracket may overlap the battery in the plan view of the vehicle.

The bracket may be located below the first case. The bracket may contact the first case. The bracket may receive the load of the first case. The bracket may be located below the battery. The bracket may overlap the battery in the plan view of the vehicle. Consequently, the bracket may conveniently receive the load of the battery.

In the above straddled vehicle, the first electrical components may further comprise:
steel pipes which may connect to the hydraulic unit; and/or
a joint member which may connect to the steel pipes.

The first electrical components may comprise steel pipes and/or a joint member. The steel pipes and/or joint member may be stored in the first case. Here, the shapes of the steel pipes cannot easily change between plural types of straddled vehicles. The shape of the joint member cannot easily change between plural types of straddled vehicles. Consequently, the cost of designing an arrangement of the steel pipes and joint member may be reduced with increased effect.

In the above straddled vehicle, it is preferred that the second electrical components may further comprise:
a second connector which may be for connecting wiring of a rear flasher light; and/or
a third connector which may be for connecting wiring of a license light.

The second electrical components may comprise a second connector and/or a third connector. The second connector and/or third connector may be stored in the second case. The arrangement of the second connector and/or third connector may therefore be designed easily. Here, the shape of the second connector may be easily changeable between plural types of straddled vehicles. The shape of the third connector may be easily changeable between plural types of straddled vehicles. Consequently, the arrangement of the second connector may be designed flexibly according to various shapes of the second connector. Similarly, the arrangement of the third connector may be designed flexibly according to various shapes of the third connector.

In the above straddled vehicle, the first electrical components may be larger in number than the second electrical components.

The number of first electrical components may be larger than the number of second electrical components. Therefore, when changing the shape of the second case without changing the shape of the first case, the cost of designing the arrangement of the first electrical components may be reduced with increased effect. The number of second electrical components may be smaller than the number of first electrical components. Therefore, even when the shape of the second case is changed, the arrangement of the second electrical components may be designed with increased ease. Consequently, by changing the shape of the second case without changing the shape of the first case, the arrangement of the entirety of the first electrical components and second electrical components may be designed with increased efficiency.

In the above straddled vehicle, the first case, in a side view of the vehicle, may extend rearward from a front end of the right seat frame and a front end of the left seat frame.

The first case having the same shape may easily be installed relative to plural types of right seat frames and left seat frames having different lengths. Thus, the first case may easily be shared between plural types of straddled vehicles with right seat frames and left seat frames having different lengths.

In the above straddled vehicle, the first case may comprise:
a first right mounting seat which may be connected to the right seat frame; and/or
a first left mounting seat which may be connected to the left seat frame; and/or
the second case may comprise:
a second right mounting seat which may be disposed more rearward than the first right mounting seat, and may be connected to the right seat frame; and/or
a second left mounting seat which may be disposed more rearward than the first left mounting seat, and may be connected to the left seat frame.

The second right mounting seat may be located more rearward than the first right mounting seat. Consequently, the position of the right seat frame connected to the second case may be different from the position of the right seat frame connected to the first case. The second left mounting seat may be located more rearward than the first left mounting seat. Consequently, the position of the left seat frame connected to the second case may be different from the position of the left seat frame connected to the first case. Therefore, even when the shape of the second case is changed, the right seat frame and left seat frame may conveniently support the first case and second case.

In the above straddled vehicle, the first right mounting seat and/or the second right mounting seat may be located above the right seat frame, respectively; and/or
the first left mounting seat and/or the second left mounting seat may be located above the left seat frame, respectively.

The right seat frame and left seat frame may support the first case and second case with increased convenience.

In the above straddled vehicle, the first case and the second case may be separably connected to each other.

The first electrical components and second electrical components may be installed in positions close to each other.

In the above straddled vehicle,
the first case may have a first bottom;
the second case may have a second bottom; and/or
the second bottom may be continuous with the first bottom.

This may allow electric wiring to be conveniently installed through the first case and second case.

In the above straddled vehicle:
the first case may comprise:
   a first right wall which may extend in the vehicle's longitudinal direction in the plan view of the vehicle; and/or
   a first left wall which may be disposed leftward of the first right wall and may extend in the vehicle's longitudinal direction in the plan view of the vehicle; and/or
the second case may comprise:
   a second right wall which may extend in the vehicle's longitudinal direction in the plan view of the vehicle; and/or
   a second left wall which may be disposed leftward of the second right wall and extending in the vehicle's longitudinal direction in the plan view of the vehicle;
the first right wall may have a rear end portion;
the first left wall may have a rear end portion;
the second right wall may have a front end portion;
the second left wall may have a front end portion;
the rear end portion of the first right wall and the front end portion of the second right wall may overlap in the side view of the vehicle;
the rear end portion of the first right wall and the front end portion of the second right wall may contact each other;
the rear end portion of the first left wall and the front end portion of the second left wall may overlap in the side view of the vehicle; and/or
the rear end portion of the first left wall and the front end portion of the second left wall may contact each other.

This may conveniently prevent the first case from shifting in the vehicle's transverse direction relative to the second case.

### BRIEF DESCRIPTION OF DRAWINGS

Embodiments of the present invention will now be described, by way of example only, with reference to the accompanying drawings, which are:
- Fig. 1: a left side view of a straddled vehicle according to a first embodiment;
- Fig. 2: a plan view of a rear portion of the straddled vehicle;
- Fig. 3: a left side view of the rear portion of the straddled vehicle;
- Fig. 4: a plan view of the rear portion of the straddled vehicle;
- Fig. 5: a perspective view of a first case and a second case;
- Fig. 6A: a plan view of the first case, and Fig. 6B is a side view of the first case;
- Fig. 7A: a plan view of the second case;
- Fig. 7B: a side view of the second case;
- Fig. 8A: a plan view showing a connection between the first case and second case;
- Fig. 8B: a side view showing the connection between the first case and second case;
- Fig. 9: a left side view of a straddled vehicle according to a second embodiment;
- Fig. 10: a plan view of a rear portion of the straddled vehicle;
- Fig. 11: a left side view of the rear portion of the straddled vehicle;
- Fig. 12: a perspective view of a first case and a second case;
- Fig. 13A: a plan view of the second case;
- Fig. 13B: a side view of the second case;
- Fig. 14A: a plan view showing a connection between the first case and second case; and
- Fig. 14B: is a side view showing the connection between the first case and second case.

### DETAILED DESCRIPTION OF DRAWINGS

A straddled vehicle according to several embodiments of the present invention will be described below with reference to the accompanying drawings. A street type vehicle will be described as one example of the straddled vehicle.

### [1] Outline construction of straddled vehicle 1

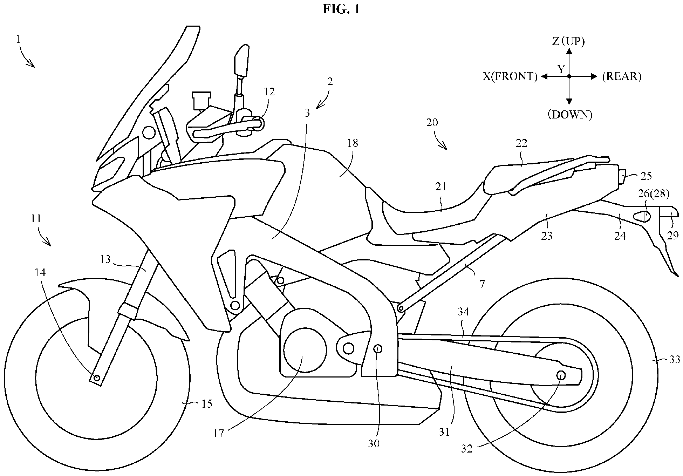

Fig. 1 is a left side view of a straddled vehicle 1 according to a first embodiment. The straddled vehicle 1 is, for example, a street type vehicle.

Fig. 1 shows a longitudinal direction X, a transverse direction Y, and an up-down direction Z of the straddled vehicle 1. The longitudinal direction X, transverse direction Y, and up-down direction Z are defined with reference to a driver mounted on the straddled vehicle 1. The longitudinal direction X, transverse direction Y, and up-down direction Z are perpendicular to one another. The longitudinal direction X and transverse direction Y are horizontal. The up-down direction Z is vertical.

The terms "forward", "rearward", "upward", "downward", "rightward", and "leftward", respectively, mean "forward", "rearward", "upward", "downward", "rightward", and "leftward" as seen from the driver mounted on the straddled vehicle 1. Unless otherwise stated in this specification, "forward" and "rearward" include not only directions parallel to the longitudinal direction X but also directions approximate to the longitudinal direction X. The directions approximate to the longitudinal direction X are, for example, directions at angles not exceeding 45 degrees to the longitudinal direction X. Similarly, unless otherwise stated, "rightward" and "leftward" include not only directions parallel to the transverse direction Y but also directions approximate to the transverse direction Y. Unless otherwise stated, "upward" and "downward" include not only directions parallel to the up-down direction Z but also directions approximate to the up-down direction Z. For reference, the drawings show front, rear, up, down, right, and left, as appropriate.

This specification uses various expressions describing arrangements, which have the following meanings, respectively. The following description will be made taking the transverse direction Y for example, and the same may be applied to the longitudinal direction X and up-down direction Z.

The expression "Member Ma is located more rightward/leftward than Member Mb," defines a position in the transverse direction Y of Member Ma relative to Member Mb, and does not define a position in the longitudinal direction X or the up-down direction Z of Member Ma relative to Member Mb. In the case of this expression, Member Ma may, or may not, overlap Member Mb in a side view of the vehicle.

The expression "Member Ma is located rightward/leftward of Member Mb," without reference to a looking direction defines a position in the transverse direction Y of Member Ma relative to Member Mb, a position in the longitudinal direction X of Member Ma relative to Member Mb, and a position in the up-down direction Z of Member Ma relative to Member Mb. This expression means that Member Ma is located more rightward/leftward than Member Mb, and that at least part of Member Ma overlaps at least part of Member Mb in a side view of the vehicle.

The expression "Member Ma is located rightward/leftward of Member Mb in a plan view of the vehicle," defines a position in the transverse direction Y of Member Ma relative to Member Mb, and a position in the longitudinal direction X of Member Ma relative to Member Mb, and does not define a position in the up-down direction Z of Member Ma relative to Member Mb. This expression means that Member Ma is located more rightward/leftward than Member Mb, and that the front end of Member Ma is located more forward than the rear end of Member Mb, and that the rear end of Member Ma is located more rearward than the front end of Member Mb.

The expression "Member Ma is located rightward/leftward of Member Mb in a front view of the vehicle," defines a position in the transverse direction Y of Member Ma relative to Member Mb, and a position in the up-down direction Z of Member Ma relative to Member Mb, and does not define a position in the longitudinal direction X of Member Ma relative to Member Mb. This expression means that Member Ma is located more rightward/leftward than Member Mb, the upper end of Member Ma is located higher than the lower end of Member Mb, and the lower end of Member Ma is located lower than the upper end of Member Mb.

The straddled vehicle 1 comprises a body frame 2. The body frame 2 has a main frame 3. The main frame 3 extends from front to rear of the body frame 2. More particularly, the main frame 3 extends rearward and downward in a side view of the vehicle.

The straddled vehicle 1 comprises a steering device 11. The steering device 11 is supported by the front of the body frame 2. The steering device 11 is rotatable relative to the body frame 2.

The steering device 11 has a handlebar 12, a front suspension 13, and a front axle 14. The handlebar 12 is disposed in an upper portion of the steering device 11. The front suspension 13 extends forward and downward from the handlebar 12. The front axle 14 is disposed in a lower portion of the steering device 11. The front axle 14 is supported by the front suspension 13.

The straddled vehicle 1 comprises a front wheel 15. The front wheel 15 is supported by the steering device 11. The front wheel 15 is supported by the front axle 14. The front wheel 15 is rotatable about the front axle 14.

The straddled vehicle 1 comprises an engine 17. At least part of the engine 17 is located below the main frame 3 in the side view of the vehicle. The engine 17 is supported by the body frame 2. For example, the engine 17 is supported by the main frame 3. The engine 17 is fixed to the body frame 2. The engine 17 is not swingable relative to the body frame 2.

The straddled vehicle 1 comprises a fuel tank 18. The fuel tank 18 is located above the engine 17 in the side view of the vehicle. At least part of the fuel tank 18 is located above the main frame 3 in the side view of the vehicle. The fuel tank 18 is supported by the body frame 2.

The straddled vehicle 1 comprises a seat 20. The seat 20 is located behind the fuel tank 18. The whole seat 20 is located lower than an upper end of the fuel tank 18. Part of the seat 20 is located in the same height position as the fuel tank 18 in the side view of the vehicle. The seat 20 is located more rearward and higher than the engine 17. The seat 20 is supported by the body frame 2.

The seat 20 has a front seat 21 and a rear seat 22. The rear seat 22 is located behind the front seat 21. The rear seat 22 is an element separate from the front seat 21. The front seat 21 and rear seat 22 are separable from each other.

The straddled vehicle 1 comprises a side cover 23. The side cover 23 is located below the seat 20 in the side view of the vehicle.

The straddled vehicle 1 comprises a mudguard 24. The mudguard 24 extends rearward and downward from the side cover 23 in the side view of the vehicle.

The straddled vehicle 1 comprises a taillight 25, a rear flasher light 26, and a license light 29. The taillight 25 is located behind the side cover 23 in the side view of the vehicle. The rear flasher light 26 and license light 29 are attached to the mudguard 24. The rear flasher light 26 emits light for notifying third parties of course changes and the like of the straddled vehicle 1. The rear flasher light 26 has a left rear flasher light 28 and a right rear flasher light not shown. The license light 29 emits light for illuminating the license plate not shown.

The straddled vehicle 1 comprises a pivot shaft 30, a swing arm 31, a rear axle 32, and a rear wheel 33. The pivot shaft 30 is located behind the engine 17 in the side view of the vehicle. The pivot shaft 30 is located lower than the fuel tank 18 and seat 20. The pivot shaft 30 is supported by the body frame 2. The swing arm 31 is supported by the pivot shaft 30. The swing arm 31 extends rearward from the pivot shaft 30. The swing arm 31 is swingable about the pivot shaft 30. The rear axle 32 is supported by a rear portion of the swing arm 31. The rear wheel 33 is supported by the rear axle 32. The rear wheel 33 is rotatable about the rear axle 32. The rear wheel 33 is located below the seat 20 in the side view of the vehicle.

The straddled vehicle 1 comprises a chain 34. The chain 34 connects to the rear wheel 33. The chain 34 transmits power outputted from the engine 17 to the rear wheel 33. The rear wheel 33 is rotated about the rear axle 32 by the power transmitted from the chain 34.

The driver sits straddling the front seat 21, and puts on a knee grip. The knee grip is a holding of part of the straddled vehicle 1 between the legs of the driver. The part of the straddled vehicle 1 is at least part of the main frame 3 and fuel tank 18, for example. The driver of the straddled vehicle 1 grasps the handlebar 12 and controls the steering device 11. A passenger of the straddled vehicle 1 sits on the rear seat 22.

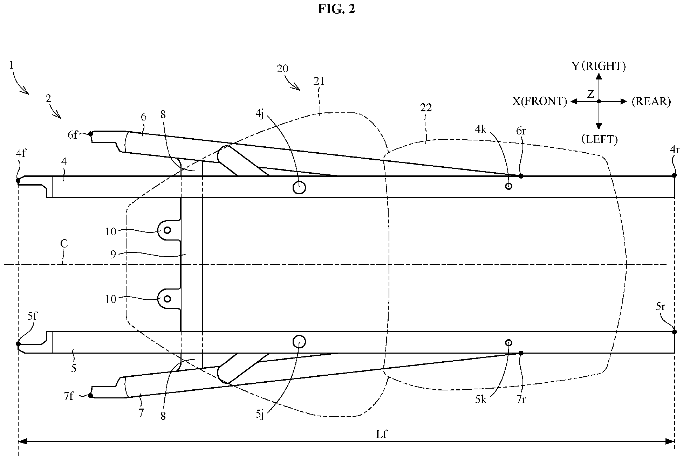

Fig. 2 is a plan view of a rear portion of the straddled vehicle 1. Fig. 2 shows a vehicle center plane C. The vehicle center plane C is an imaginary plane perpendicular to the transverse direction Y. The vehicle center plane C passes through the center of the straddled vehicle 1. Fig. 2 shows the seat 20 in two-dot chain lines. Fig. 2 omits the side cover 23 and other elements.

The body frame 2 has a right seat frame 4 and a left seat frame 5. The right seat frame 4 extends in the longitudinal direction X in the plan view of the vehicle. The left seat frame 5 is located leftward of the right seat frame 4. The left seat frame 5 extends in the longitudinal direction X in the plan view of the vehicle.

The right seat frame 4 is located rightward of the vehicle center plane C. The left seat frame 5 is located leftward of the vehicle center plane C.

The right seat frame 4 has a front end 4f and a rear end 4r. The left seat frame 5 has a front end 5f and a rear end 5r. The front ends 4f and 5f are connected to the main frame 3, respectively.

Fig. 2 shows a length Lf. The length Lf is a length in the longitudinal direction X of the right seat frame 4 and left seat frame 5. More particularly, the length Lf is a distance in the longitudinal direction X between the front ends 4f and 5f and the rear ends 4r and 5r.

The body frame 2 has a right backstay 6 and a left backstay 7. The right backstay 6 extends in the longitudinal direction X in the plan view of the vehicle. The left backstay 7 is located leftward of the right backstay 6. The left backstay 7 extends in the longitudinal direction X in the plan view of the vehicle.

The right backstay 6 is located rightward of the vehicle center plane C. The left backstay 7 is located leftward of the vehicle center plane C.

The right backstay 6 has a front end 6f and a rear end 6r. The left backstay 7 has a front end 7f and a rear end 7r. The front ends 6f and 7f are connected to the main frame 3, respectively. The rear end 6r is connected to the right seat frame 4. The rear end 7r is connected to the left seat frame 5.

The body frame 2 has a bracket 8. The bracket 8 is supported by the right backstay 6 and left backstay 7. The bracket 8 extends in the transverse direction Y. The bracket 8 is located more rearward than the front ends 4f and 5f. The bracket 8 is located more rearward than the front ends 6f and 7f. The bracket 8 is located more forward than the rear ends 4r and 5r. The bracket 8 is located more forward than the rear ends 6r and 7r.

The bracket 8 has a plate portion 9 and two mounting seats 10. The plate portion 9 has a substantially flat plate shape. At least part of the plate portion 9 is, in the plan view of the vehicle, located leftward of the right seat frame 4 and rightward of the left seat frame 5. Each mounting seat 10 is, in the plan view of the vehicle, also located leftward of the right seat frame 4 and rightward of the left seat frame 5. Each mounting seat 10 is connected to the plate portion 9.

The seat 20 is located above the right seat frame 4 and left seat frame 5. The seat 20 overlaps the right seat frame 4 and left seat frame 5 in the plan view of the vehicle.

The seat 20 is located above the right backstay 6 and left backstay 7. The seat 20 overlaps the right backstay 6 and left backstay 7 in the plan view of the vehicle.

The seat 20 is located above the bracket 8. The seat 20 overlaps the bracket 8 in the plan view of the vehicle.

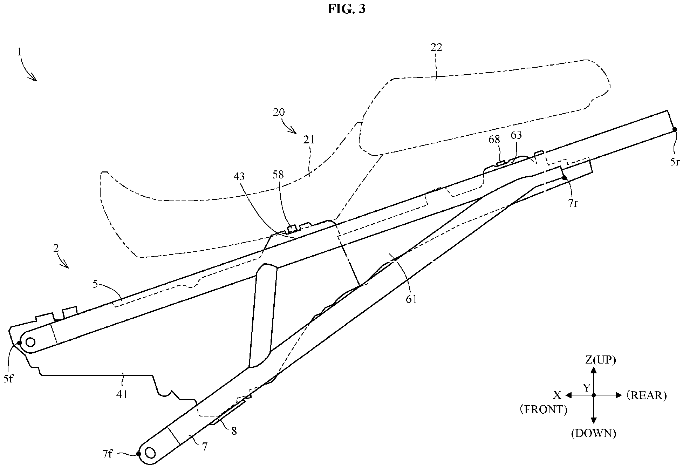

Fig. 3 is a left side view of the rear portion of the straddled vehicle 1. Fig. 3 shows the seat 20 in two-dot chain lines. Fig. 3 omits the side cover 23 and other elements.

The left seat frame 5 extends rearward and upward in the side view of the vehicle. The right seat frame 4 overlaps the left seat frame 5 in the side view of the vehicle. Though not shown, the right seat frame 4 also extends rearward and upward in the side view of the vehicle.

The left backstay 7 is located below the left seat frame 5 in the side view of the vehicle. The left backstay 7 extends rearward and upward in the side view of the vehicle. The right backstay 6 overlaps the left backstay 7 in the side view of the vehicle. Though not shown, the right backstay 6 is also located below the right seat frame 4 in the side view of the vehicle. The right backstay 6 also extends rearward and upward in the side view of the vehicle.

The bracket 8 is located below the right seat frame 4 and left seat frame 5 in the side view of the vehicle.

The seat 20 is located above the right seat frame 4 and left seat frame 5 in the side view of the vehicle.

Though not shown, the right seat frame 4 and left seat frame 5 are located above the rear wheel 33 in the side view of the vehicle. The right backstay 6 and left backstay 7 are located above the rear wheel 33 in the side view of the vehicle. The bracket 8 is located above the rear wheel 33 in the side view of the vehicle.

### [2] First case 41 and second case 61 of straddle vehicle 1

Reference is made to Fig. 3. The straddled vehicle 1 comprises a first case 41. The first case 41 extends rearward from the front end 5f of the left seat frame 5 in the side view of the vehicle. The first case 41 overlaps the front end 5f of the left seat frame 5 in the side view of the vehicle. Though not shown, the first case 41 extends rearward from the front end 4f of the right seat frame 4 in the side view of the vehicle. The first case 41 overlaps the front end 4f of the right seat frame 4 in the side view of the vehicle.

The first case 41 overlaps the left seat frame 5 and left backstay 7 in the side view of the vehicle. Most part of the first case 41 is located below the left seat frame 5 and above the left backstay 7 in the side view of the vehicle.

The straddled vehicle 1 comprises a second case 61. The second case 61 is located behind the first case 41.

The second case 61 overlaps the left seat frame 5 and left backstay 7 in the side view of the vehicle. Most part of the second case 61 is located below the left seat frame 5 and above the left backstay 7 in the side view of the vehicle.

The first case 41 and second case 61 are located below the seat 20 in the side view of the vehicle.

Though not shown, the first case 41 and second case 61 are located above the rear wheel 33 in the side view of the vehicle.

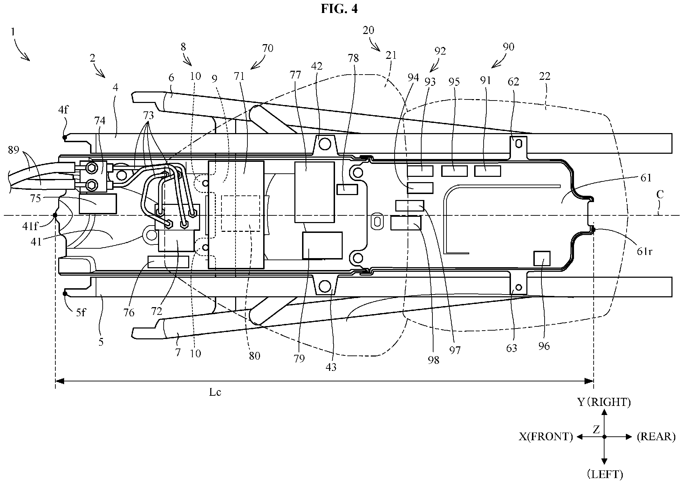

Fig. 4 is a plan view of the rear portion of the straddled vehicle 1. Fig. 4 shows the first case 41 and second case 61. Fig. 4 shows the seat 20 in two-dot chain lines. Fig. 4 omits the side cover 23 and other elements.

The first case 41 is located leftward of the right seat frame 4, rightward of the left seat frame 5, and below the seat 20. The second case 61 is located leftward of the right seat frame 4, rightward of the left seat frame 5, below the seat 20, and behind the first case 41.

The first case 41 is located leftward of the right backstay 6 and rightward of the left backstay 7. The second case 61 is located leftward of the right backstay 6 and rightward of the left backstay 7.

The first case 41 is located above the bracket 8. The first case 41 overlaps the bracket 8 in the plan view of the vehicle. The second case 61 is located more rearward than the bracket 8. The second case 61 does not overlap the bracket 8 in the plan view of the vehicle.

The first case 41 and second case 61 overlap the seat 20 in the plan view of the vehicle.

The first case 41 has a front end 41f. The front end 41f is, with respect to the longitudinal direction X, located in a position corresponding to the front ends 4f and 5f or more forward than the front ends 4f and 5f.

Fig. 4 shows a length Lc. The length Lc is an entire length in the longitudinal direction X of the first case 41 and second case 61. More particularly, the length Lc is a distance in the longitudinal direction X between the front end 41f of the first case 41 and a rear end 61r of the second case 61. The length Lc is smaller than the length Lf.

The first case 41 is supported by the right seat frame 4 and left seat frame 5. The first case 41 has a first right mounting seat 42 and a first left mounting seat 43. The first right mounting seat 42 is located above the right seat frame 4. The first right mounting seat 42 is connected to the right seat frame 4. The first left mounting seat 43 is located above the left seat frame 5. The first left mounting seat 43 is connected to the left seat frame 5.

The first case 41 is further supported by the bracket 8. The bracket 8 is located below the first case 41. The bracket 8 contacts the first case 41. The bracket 8 directly contacts the first case 41. The bracket 8 receives the load of the first case 41. The bracket 8 is further connected to the first case 41.

Specifically, the plate portion 9 is located below the first case 41. The plate portion 9 contacts the first case 41. The plate portion 9 receives the load of the first case 41. The mounting seat 10 is located below the first case 41. The mounting seat 10 is connected to the first case 41.

The second case 61 is supported by the right seat frame 4 and left seat frame 5. The second case 61 has a second right mounting seat 62 and a second left mounting seat 63. The second right mounting seat 62 is located more rearward than the first right mounting seat 42. The second right mounting seat 62 is located above the right seat frame 4. The second right mounting seat 62 is connected to the right seat frame 4. The second left mounting seat 63 is located more rearward than the first left mounting seat 43. The second left mounting seat 63 is located above the left seat frame 5. The second left mounting seat 63 is connected to the left seat frame 5.

Reference is made to Fig. 2. Fig. 2 shows positions 4j and 4k of the right seat frame 4. The right seat frame 4 is, in the position 4j, connected to the first right mounting seat 42. The right seat frame 4 is, in the position 4k, connected to the second right mounting seat 62. The position 4k is located more rearward than the position 4j.

Fig. 2 shows positions 5j and 5k of the left seat frame 5. The left seat frame 5 is, in the position 5j, connected to the first left mounting seat 43. The left seat frame 5 is, in the position 5k, connected to the second left mounting seat 63. The position 5k is located more rearward than the position 5j.

Reference is made to Fig. 3. The straddled vehicle 1 comprises fastening members 58 and 68. The fastening member 58 fastens the left seat frame 5 and first left mounting seat 43. The fastening member 68 fastens the left seat frame 5 and second left mounting seat 63. The fastening members 58 and 68 are bolts, for example.

### [3] First electrical components 70 and second electrical components 90 of straddle vehicle 1

Reference is made to Fig. 4. The straddled vehicle 1 comprises a plurality of first electrical components 70. The first electrical components 70 are stored in the first case 41. All the first electrical components 70 are stored in the first case 41. All the first electrical components 70 overlap the first case 41 in the plan view of the vehicle.

The first electrical components 70 comprise a battery 71. The battery 71 is stored in the first case 41. The whole battery 71 overlaps the first case 41 in the plan view. The first electrical components 70 other than the battery 71 are similarly located relative to the first case 41.

The battery 71 is located above the bracket 8. The battery 71 overlaps the bracket 8 in the plan view of the vehicle. At least part of the battery 71 overlaps the bracket 8 in the plan view of the vehicle.

The battery 71 is located above the plate portion 9. The battery 71 overlaps the plate portion 9 in the plan view of the vehicle.

The first electrical components 70 comprise a hydraulic unit 72. In the plan view of the vehicle, the battery 71 and hydraulic unit 72 are arranged along the longitudinal direction X. For example, the hydraulic unit 72 is located in front of the battery 71 in the plan view of the vehicle.

The hydraulic unit 72 adjusts the hydraulic pressure of brake fluid. Specifically, the straddled vehicle 1 comprises a front brake mechanism (not shown) for braking the front wheel 15 and a rear brake mechanism (not shown) for braking the rear wheel 33. The hydraulic unit 72 is connected to at least one of the front brake mechanism and rear brake mechanism. For example, the hydraulic unit 72 adjusts the hydraulic pressure of the brake fluid of the front brake mechanism to suppress the lock tendency of the front wheel 15. For example, the hydraulic unit 72 adjusts the hydraulic pressure of the brake fluid of the rear brake mechanism to suppress the lock tendency of the rear wheel 33.

The first electrical components 70 comprise steel pipes 73. The steel pipes 73 are connected to the hydraulic unit 72. The steel pipes 73 do not have flexibility.

The first electrical components 70 comprise a joint member 74. The joint member 74 is connected to the steel pipes 73. For example, the joint member 74 is located in front of the hydraulic unit 72 in the plan view of the vehicle.

The straddled vehicle comprises flexible tubes 89. The flexible tubes 89 are connected to the joint member 74. The flexible tubes 89 have flexibility. The joint member 74 joins the steel pipes 73 and flexible tubes 89. The flexible tubes 89 are rubber tubes, for example. The flexible tubes 89 are not the first electrical components 70. This is because at least parts of the flexible tubes 89 are located outside the first case 41.

The first electrical components 70 comprise a main relay 75. The main relay 75 is located leftward of the joint member 74 in the plan view of the vehicle, for example.

The first electrical components 70 comprise a fan relay 76. The fan relay 76 is located leftward of the hydraulic unit 72 in the plan view of the vehicle, for example.

The first electrical components 70 comprise a fuse box 77. The fuse box 77 is located behind the battery 71 in the plan view of the vehicle, for example.

The first electrical components 70 comprise a stop lamp relay 78. The stop lamp relay 78 is located behind the fuse box 77 in the plan view of the vehicle, for example.

The first electrical components 70 comprise a starter relay 79. The starter relay 79 is located leftward of the fuse box 77 in the plan view of the vehicle, for example.

The first electrical components 70 comprise an inertial measurement unit 80. The inertial measurement unit 80 overlaps the battery 71 in the plan view of the vehicle. The inertial measurement unit 80 is located below the battery 71, for example.

As described above, the number of first electrical components 70 is ten, for example. The battery 71 is large compared with the first electrical components 70 other than the battery 71.

The straddled vehicle 1 comprises a plurality of second electrical components 90. The second electrical components 90 are stored in the second case 61. All the second electrical components 90 are stored in the second case 61. All the second electrical components 90 overlap the second case 61 in the plan view of the vehicle.

The second electrical components 90 comprise a first connector 91. The first connector 91 connects wiring of the taillight 25. The first connector 91 is stored in the second case 61. The whole first connector 91 overlaps the second case 61 in the plan view. The second electrical components 90 other than the first connector 91 are similarly located relative to the second case 61.

The second electrical components 90 comprise a second connector 92. The second connector 92 connects wiring of the rear flasher light 26. For example, the second connector 92 is located in front of the first connector 91 in the plan view of the vehicle.

The second connector 92 comprises a second right connector 93 and a second left connector 94. The second right connector 93 connects wiring of the right rear flasher light. The second left connector 94 connects wiring of the left rear flasher light 28. For example, the second right connector 93 and second left connector 94 are arranged to align in the transverse direction Y in the plan view of the vehicle.

The second electrical components 90 comprise a third connector 95. The third connector 95 connects wiring of the license light 29. For example, the third connector 95 is located in front of the first connector 91 in the plan view of the vehicle. For example, the third connector 95 is located behind the second connector 92 in the plan view of the vehicle.

The second electrical components 90 comprise an on-board diagnostics 96. For example, the on-board diagnostics 96 is located more rearward and more leftward than the first connector 91.

The second electrical components 90 comprise a heater relay 97. The heater relay 97 is located leftward of the second connector 92 in the plan view of the vehicle.

The second electrical components 90 comprise a seat heater switch 98. The seat heater switch 98 is located leftward of the heater relay 97 in the plan view of the vehicle.

As described above, the number of second electrical components 90 is seven, for example. The number of second electrical components 90 is smaller than the number of first electrical components 70.

### [4] Details of first case 41 and second case 61 of straddle vehicle 1

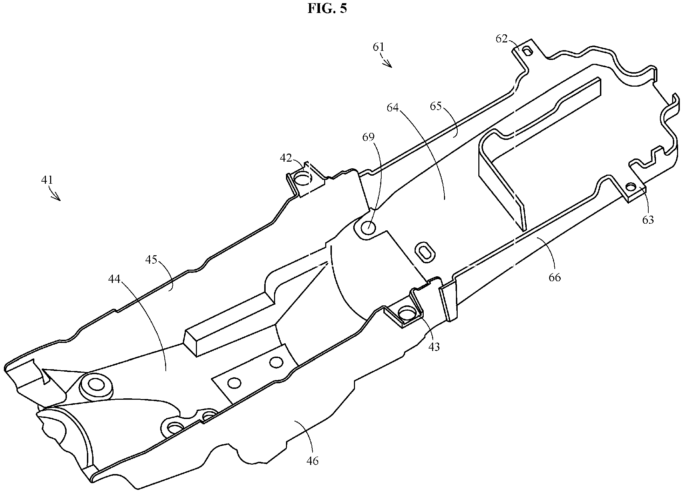

Fig. 5 is a perspective view of the first case 41 and second case 61. The volume of the first case 41 is larger than the volume of the second case 61.

The first case 41 has a first bottom 44, a first right wall 45, and a first left wall 46. The second case 61 has a second bottom 64, a second right wall 65, and a second left wall 66. The volume of the first case 41 corresponds to the volume of a space demarcated by the first bottom 44, first right wall 45, and first left wall 46. The volume of the second case 61 corresponds to the volume of a space demarcated by the second bottom 64, second right wall 65, and second left wall 66.

The second bottom 64 is continuous with the first bottom 44. The second right wall 65 is continuous with the first right wall 45. The second left wall 66 is continuous with the first left wall 46.

The second case 61 is an element separate from the first case 41.

The first case 41 is formed integral. The first case 41 is inseparable into a plurality of members. The second case 61 is formed integral. The second case 61 is inseparable into a plurality of members.

The first case 41 is made of synthetic resin, for example. The second case 61 is made of synthetic resin, for example. The first case 41 and second case 61 are formed separately. The first case 41 and second case 61 are formed using forming dies, respectively. The forming die for forming the second case 61 is different from the forming die for forming the first case 41.

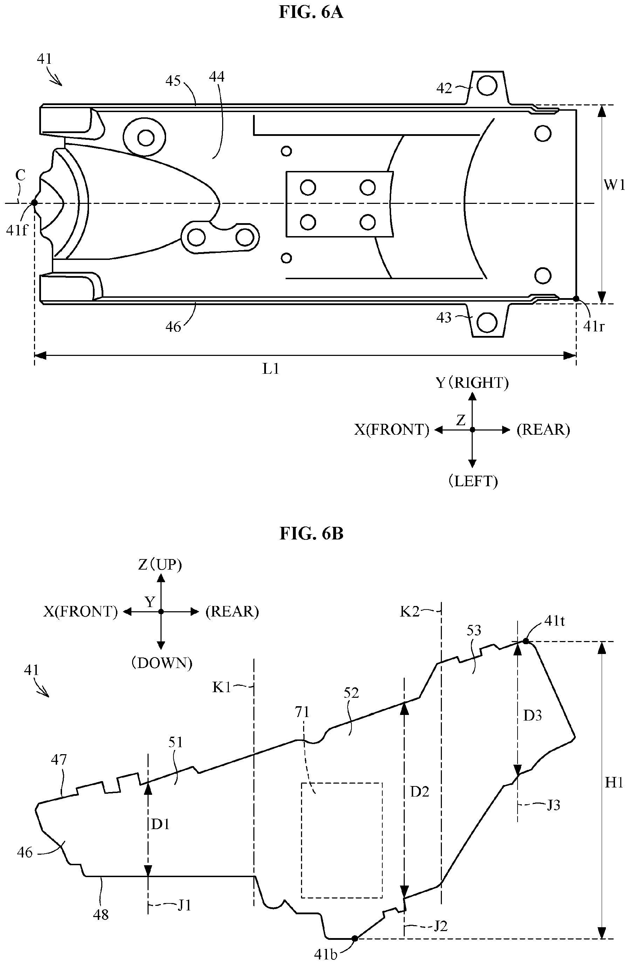

Fig. 6A is a plan view of the first case 41. The first case 41 has a substantially rectangular shape in the plan view of the vehicle.

The first bottom 44 crosses the vehicle center plane C in the plan view of the vehicle. The first bottom 44 extends in the longitudinal direction X and transverse direction Y in the plan view of the vehicle. The first right wall 45 is located rightward of the vehicle center plane C in the plan view of the vehicle. The first right wall 45 is located on a right edge of the first bottom 44 in the plan view of the vehicle. The first right wall 45 is connected to the first bottom 44. The first right wall 45 extends upward from the first bottom 44. The first right wall 45 extends in the longitudinal direction X in the plan view of the vehicle. The first left wall 46 is located leftward of the first right wall 45. The first left wall 46 is located leftward of the vehicle center plane C in the plan view of the vehicle. The first left wall 46 is located on a left edge of the first bottom 44. The first left wall 46 is connected to the first bottom 44. The first left wall 46 extends upward from the first bottom 44. The first left wall 46 extends in the longitudinal direction X in the plan view of the vehicle.

The first right mounting seat 42 is connected to the first right wall 45. The first right mounting seat 42 extends rightward from the first right wall 45. The first left mounting seat 43 is connected to the first left wall 46. The first left mounting seat 43 extends leftward from the first left wall 46.

The first right wall 45 is located leftward of the right seat frame 4 in the plan view of the vehicle. The first left wall 46 is located rightward of the left seat frame 5 in the plan view of the vehicle.

Fig. 6A shows a length L1 and a width W1. The length L1 is a length of the first case 41 in the longitudinal direction X. More particularly, the length L1 is a distance in the longitudinal direction X between the front end 41f of the first case 41 and the rear end 41r of the first case 41. The width W1 is a length of the first case 41 in the transverse direction Y. More particularly, the width W1 is a distance in the transverse direction Y between the first right wall 45 and first left wall 46. The length L1 is smaller than the length Lc. The length L1 is larger than the width W1. The width W1 is slightly smaller than a separation distance in the transverse direction Y between the right seat frame 4 and left seat frame 5.

Fig. 6B is a side view of the first case 41. The first case 41 has an upper edge 47 and a lower edge 48 in the side view of the vehicle. The upper edge 47 corresponds to an upper edge of the first left wall 46, for example. The upper edge 47 extends rearward and upward in the side view of the vehicle. The lower edge 48 corresponds to a lower edge of the first left wall 46, for example. The lower edge 48 corresponds to the first bottom 44, for example. In the side view of the vehicle, the lower edge 48 is curved to bulge downward. The lower edge 48 comprises, in the side view of the vehicle, portions extending rearward and downward, and portions extending rearward and upward.

The first case 41 is divided into a front portion 51, a middle portion 52, and a rear portion 53. The front portion 51, the middle portion 52, and the rear portion 53 are integrally formed. The front portion 51, the middle portion 52, and the rear portion 53 are inseparable from one another. Fig. 6B exemplifies boundary lines K1 and K2. The boundary line K1 is an imaginary line schematically showing a boundary between the front portion 51 and middle portion 52. The boundary line K2 is an imaginary line schematically showing a boundary between the middle portion 52 and rear portion 53. The middle portion 52 is located behind the front portion 51. The rear portion 53 is located behind the middle portion 52.

Fig. 6B shows a depth D1 of the front portion 51, a depth D2 of the middle portion 52, and a depth D3 of the rear portion 53. The depth D1 is a length on an imaginary line J1 of the front portion 51. The depth D2 is a length on an imaginary line J2 of the middle portion 52. The depth D3 is a length on an imaginary line J3 of the rear portion 53. Here, the imaginary lines J1, J2, and J3 are parallel to the up-down direction Z, respectively. The imaginary line J1 crosses the front portion 51 in the side view of the vehicle. The imaginary line J2 crosses the middle portion 52 in the side view of the vehicle. The imaginary line J3 crosses the rear portion 53 in the side view of the vehicle. The depth D2 is larger than the depth D1. The depth D2 is larger than the depth D3. Thus, the middle portion 52 is a portion having the largest depth in the first case 41.

The middle portion 52 stores the battery 71.

Though not shown, the middle portion 52 is located above the bracket 8. The middle portion 52 overlaps the bracket 8 in the plan view of the vehicle. The middle portion 52 directly contacts the bracket 8. The middle portion 52 is directly supported by the bracket 8.

Fig. 6B shows a height H1. The height H1 is a length in the up-down direction Z of the first case 41. More particularly, the height H1 is a distance in the up-down direction Z between an upper end 41t of the first case 41 and a lower end 41b of the first case 41.

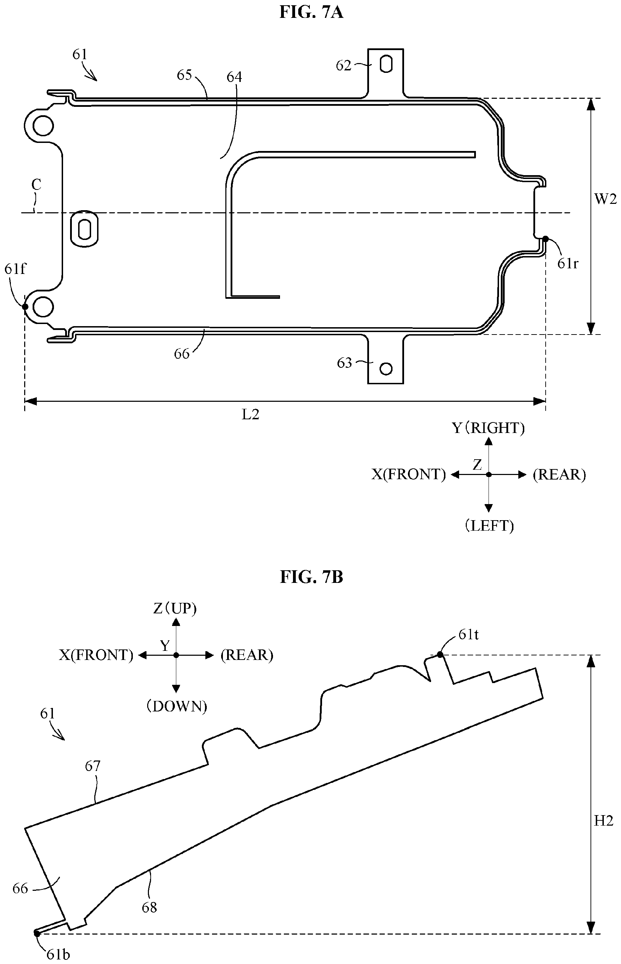

Fig. 7A is a plan view of the second case 61. The second case 61 has a substantially rectangular shape in the plan view of the vehicle.

The second bottom 64 crosses the vehicle center plane C in the plan view of the vehicle. The second bottom 64 extends in the longitudinal direction X and transverse direction Y in the plan view of the vehicle. The second right wall 65 is located rightward of the vehicle center plane C in the plan view of the vehicle. The second right wall 65 is located on a right edge of the second bottom 64 in the plan view of the vehicle. The second right wall 65 is connected to the second bottom 64. The second right wall 65 extends upward from the second bottom 64. The second right wall 65 extends in the longitudinal direction X in the plan view of the vehicle. The second left wall 66 is located leftward of the second right wall 65. The second left wall 66 is located leftward of the vehicle center plane C in the plan view of the vehicle. The second left wall 66 is located on a left edge of the second bottom 64 in the plan view of the vehicle. The second left wall 66 is connected to the second bottom 64. The second left wall 66 extends upward from the second bottom 64. The second left wall 66 extends in the longitudinal direction X in the plan view of the vehicle.

The second right mounting seat 62 is connected to the second right wall 65. The second right mounting seat 62 extends rightward from the second right wall 65. The second left mounting seat 63 is connected to the second left wall 66. The second left mounting seat 63 extends leftward from the second left wall 66.

The second right wall 65 is located leftward of the right seat frame 4 in the plan view of the vehicle. The second left wall 66 is located rightward of the left seat frame 5 in the plan view of the vehicle.

Fig. 7A shows a length L2 and a width W2. The length L2 is a length of the second case 61 in the longitudinal direction X. More particularly, the length L2 is a distance in the longitudinal direction X between a front end 61f of the second case 61 and the rear end 61r of the second case 61. The width W2 is a length of the second case 61 in the transverse direction Y. More particularly, the width W2 is a distance in the transverse direction Y between the second right wall 65 and second left wall 66. The length L2 is smaller than the length L1. The length L2 is larger than the width W2. The width W2 is substantially equal to the width W1. The width W2 is slightly smaller than a separation distance in the transverse direction Y between the right seat frame 4 and left seat frame 5.

Fig. 7B is a side view of the second case 61. The second case 61 has an upper edge 67 and a lower edge 68 in the side view of the vehicle. The upper edge 67 corresponds to an upper edge of the second left wall 66, for example. The upper edge 67 extends rearward and upward in the side view of the vehicle. The lower edge 68 corresponds to a lower edge of the second left wall 66, for example. The lower edge 68 corresponds to the second bottom 64, for example. In the side view of the vehicle, the lower edge 68 extends rearward and upward.

Fig. 7B shows a height H2. The height H2 is a length in the up-down direction Z of the second case 61. More particularly, the height H2 is a distance in the up-down direction Z between an upper end 61t of the second case 61 and a lower end 61b of the second case 61. The height H2 is smaller than the height H1.

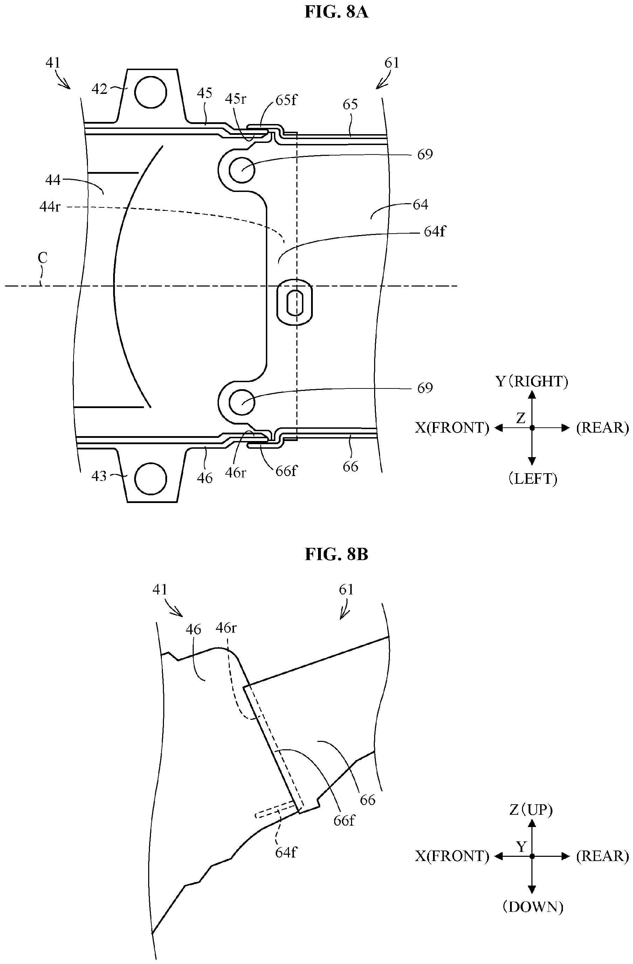

Fig. 8A is a plan view showing a connection between the first case 41 and second case 61. The first case 41 and second case 61 are connected to be attachable to and detachable from each other.

The first case 41 and second case 61 are joined together by clamps 69. The clamps 69 are plastic rivets, plastic push pins, or push clips, for example. The clamps 69 are the removable type. The clamps 69 can be removed easily. The first case 41 and second case 61 can therefore be connected easily and separated easily.

The first bottom 44 has a rear end portion 44r. The second bottom 64 has a front end portion 64f. The rear end portion 44r and front end portion 64f are stacked in the up-down direction Z. The rear end portion 44r and front end portion 64f overlap in the plan view of the vehicle. For example, the front end portion 64f is placed above the rear end portion 44r. The front end portion 64f contacts the rear end portion 44r.

Further, the rear end portion 44r and front end portion 64f are joined together by the clamps 69.

The first right wall 45 has a rear end portion 45r. The second right wall 65 has a front end portion 65f. The rear end portion 45r and front end portion 65f are arranged in the transverse direction Y. For example, the front end portion 65f is located rightward of the rear end portion 45r. The front end portion 65f contacts the rear end portion 45r.

The first left wall 46 has a rear end portion 46r. The second left wall 66 has a front end portion 66f. The rear end portion 46r and front end portion 66f are arranged in the transverse direction Y. For example, the front end portion 66f is located leftward of the rear end portion 46r. The front end portion 66f contacts the rear end portion 46r.

Fig. 8B is a side view showing the connection between the first case 41 and second case 61. The rear end portion 46r and front end portion 66f overlap in the side view of the vehicle. Though not shown, the rear end portion 45r and front end portion 65f overlap in the side view of the vehicle.

### [5] Advantageous effects

The straddled vehicle 1 comprises the right seat frame 4, left seat frame 5, seat 20, first case 41, and second case 61. The right seat frame 4 extends in the longitudinal direction X in a plan view of the vehicle. The left seat frame 5 is located leftward of the right seat frame 4. The left seat frame 5 extends in the longitudinal direction X in the plan view of the vehicle. The seat 20 is located above the right seat frame 4 and left seat frame 5. The first case 41 is located leftward of the right seat frame 4, rightward of the left seat frame 5, and below the seat 20. The second case 61 is located leftward of the right seat frame 4, rightward of the left seat frame 5, below the seat 20, and behind the first case 41. The second case 61 is an element separate from the first case 41. Consequently, it is possible to change the length Lc easily by changing the shape of the second case 61 without changing the shape of the first case 41. Here, "changing the shape of the second case 61" indicates, for example, preparing plural types of second cases 61 different in shape, and switching between the plural types of second cases 61. Thus, the first case 41 and second case 61 are easily applicable to plural types of straddled vehicles 1 having different lengths Lf. The first case 41 having the same shape is easily applicable to plural types of straddled vehicles 1 having different lengths Lf. That is, the first case 41 can easily be shared between plural types of straddled vehicles 1 having different lengths Lf.

When the first case 41 is shared between plural types of straddled vehicles 1, the manufacturing cost of the first case 41 can be reduced effectively. The volume of the second case 61 is smaller than the volume of the first case 41. So, even when plural types of second cases 61 different in shape are prepared, the manufacturing cost of the second case 61 can be kept down not to become excessively high. Thus, by changing the shape of the second case 61 without changing the shape of the first case 41, the overall manufacturing cost of the first case 41 and second case 61 can conveniently be kept down.

The first case 41 stores a plurality of first electrical components 70. The second case 61 stores a plurality of second electrical components 90. When the shape of the first case 41 remains unchanged, the arrangement of the first electrical components 70 cannot change easily. When the shape of the second case 61 changes, the arrangement of the second electrical components 90 is easily changeable. Consequently, when changing the shape of the second case 61 without changing the shape of the first case 41, it is sufficient to design only the arrangement of the second electrical components 90. This enables an effective reduction of the cost of designing the arrangement of the first electrical components 70. Further, the volume of the second case 61 is smaller than the volume of the first case 41. Even when the shape of the second case 61 is changed, the arrangement of the second electrical components 90 can be designed easily. Thus, by changing the shape of the second case 61 without changing the shape of the first case 41, the overall arrangement of the first electrical components 70 and second electrical components 90 can be efficiently designed.

The first electrical components 70 comprise the battery 71 and hydraulic unit 72. The battery 71 and hydraulic unit 72 are stored in the first case 41. Here, the shape of the battery 71 cannot change easily between plural types of straddled vehicles 1. The shape of the hydraulic unit 72 cannot change easily between plural types of straddled vehicles 1. Consequently, the cost of designing an arrangement of the battery 71 and hydraulic unit 72 can be reduced with increased effect. The second electrical components 90 comprise the first connector 91. The first connector 91 is stored in the second case 61. The arrangement of the first connector 91 can therefore be designed easily. Here, the shape of the first connector 91 is easily changeable between plural types of straddled vehicles 1. Thus, the arrangement of the first connector 91 can be designed flexibly according to various shapes of the first connector 91. This enables an efficient designing of the arrangement of the battery 71, hydraulic unit 72, and first connector 91.

According to the straddled vehicle 1, as described above, the manufacturing cost of the first case 41 and second case 61 can be held down. Further, the arrangement of the first electrical components 70 and second electrical components 90 can be designed efficiently.

The height H2 is smaller than the height H1. Thus, even when plural types of second cases 61 different in shape are prepared, it is possible to keep down the manufacturing cost of the second cases 61 not to become excessively high. By changing the shape of the second case 61 without changing the shape of the first case 41, the overall manufacturing cost of the first case 41 and second case 61 can be kept down with increased effect.

The length L2 is smaller than the length L1. Thus, even when plural types of second cases 61 different in shape are prepared, it is possible to keep down the manufacturing cost of the second cases 61 not to become excessively high. By changing the shape of the second case 61, without changing the shape of the first case 41, the overall manufacturing cost of the first case 41 and second case 61 can be kept down with increased effect.

The battery 71 and hydraulic unit 72 are arranged to align in the longitudinal direction X in the plan view of the vehicle. This can conveniently prevent the width W1 from becoming excessively large. The first case 41 can therefore easily be located leftward of the right seat frame 4 and rightward of the left seat frame 5. Further, the height H1 can conveniently be prevented from becoming excessively large. The first case 41 can therefore easily be located below the seat 20.

The first case 41 is divided into the front portion 51, middle portion 52, and rear portion 53. The middle portion 52 is located behind the front portion 51. The rear portion 53 is located behind the middle portion 52. The depth D2 of the middle portion 52 is larger than the depth D1 of the front portion 51 and the depth D3 of the rear portion 53. The battery 71 is stored in the middle portion 52. Therefore, even when the battery 71 is relatively large, the middle portion 52 can conveniently store the battery 71.

The straddled vehicle 1 comprises the bracket 8. The bracket 8 is located below the first case 41. The bracket 8 contacts the first case 41. The bracket 8 receives the load of the first case 41. The bracket 8 can therefore conveniently support the first case 41.

The bracket 8 is located below the battery 71. The bracket 8 overlaps the battery 71 in the plan view of the vehicle. Consequently, the bracket 8 can conveniently receive the load of the battery 71. Even when the battery 71 is relatively heavy, the bracket 8 can conveniently support the first case 41.

The bracket 8 is located below the middle portion 52. The bracket 8 contacts the middle portion 52. Consequently, the bracket 8 can conveniently receive the load of the battery 71. Even when the battery 71 is relatively heavy, the bracket 8 can conveniently support the middle portion 52.

The first electrical components 70 further comprise the steel pipes 73 and joint member 74. The steel pipes 73 and joint member 74 are stored in the first case 41. Here, the shapes of the steel pipes 73 cannot easily change between plural types of straddled vehicles 1. The shape of the joint member 74 cannot easily change between plural types of straddled vehicles 1. Consequently, the cost of designing an arrangement of the steel pipes 73 and joint member 74 can be reduced with increased effect.

The second electrical components 90 comprise the second connector 92 and third connector 95. The second connector 92 and third connector 95 are stored in the second case 61. The arrangement of the second connector 92 and third connector 95 can therefore be designed easily. Here, the shape of the second connector 92 is easily changeable between plural types of straddled vehicles 1. The shape of the third connector 95 is easily changeable between plural types of straddled vehicles 1. Consequently, the arrangement of the second connector 92 can be designed flexibly according to various shapes of the second connector 92. The arrangement of the third connector 95 can be designed flexibly according to various shapes of the third connector 95.

The number of first electrical components 70 is larger than the number of second electrical components 90. Therefore, when changing the shape of the second case 61 without changing the shape of the first case 41, the cost of designing the arrangement of the first electrical components 70 can be reduced with increased effect. The number of second electrical components 90 is smaller than the number of first electrical components 70. Therefore, even when the shape of the second case 90 is changed, the arrangement of the second electrical components 90 can be designed with increased ease. Consequently, by changing the shape of the second case 61 without changing the shape of the first case 41, the arrangement of the entirety of the first electrical components 70 and second electrical components 90 can be designed with increased efficiency.

In the side view of the vehicle, the first case 41 extends rearward from the front end 4f of the right seat frame 4 and the front end 5f of the left seat frame 5. Consequently, the first case 41 having the same shape can easily be installed relative to plural types of right seat frames 4 and left seat frames 5 having different lengths Lf. Thus, the first case 41 can easily be shared between plural types of straddled vehicles 1 having different lengths Lf.

The first case 41 has the first right mounting seat 42 and first left mounting seat 43. The second case 61 has the second right mounting seat 62 and second left mounting seat 63. The second right mounting seat 62 is located more rearward than the first right mounting seat 42. Consequently, the position 4k of the right seat frame 4 connected to the second case 61 is different from the position 4j of the right seat frame 4 connected to the first case 41. The second left mounting seat 63 is located more rearward than the first left mounting seat 43. Consequently, the position 5k of the left seat frame 5 connected to the second case 61 is different from the position 5j of the left seat frame 5 connected to the first case 41. Therefore, even when the shape of the second case 61 is changed, the right seat frame 4 and left seat frame 5 can conveniently support the first case 41 and second case 61.

The first right mounting seat 42 and second right mounting seat 62 are located above the right seat frame 4, respectively. The right seat frame 4 can therefore support the first case 41 and second case 61 with increased convenience. The first left mounting seat 43 and second left mounting seat 63 are located above the left seat frame 5, respectively. The left seat frame 5 can therefore support the first case 41 and second case 61 with increased convenience.

The first case 41 and second case 61 are separably connected to each other. Consequently, the first electrical components 70 and second electrical components 90 can be installed in positions close to each other. In particular, the second electrical components 90 can be arranged close to the battery 71.

The first case 41 has the first bottom 44. The second case 61 has the second bottom 64. The second bottom 64 is continuous with the first bottom 44. Therefore, electric wiring not shown can be installed conveniently through the first case 41 and second case 61.

The first case 41 has the first right wall 45 and first left wall 46. The second case 61 has the second right wall 65 and second left wall 66. The second right wall 65 is continuous with the first right wall 45. The second left wall 66 is continuous with the first left wall 46. Therefore, electric wiring can be installed through the first case 41 and second case 61 with increased convenience.

The first right wall 45 has the rear end portion 45r. The second right wall 65 has the front end portion 65f. The rear end portion 45r and front end portion 65f overlap in the side view of the vehicle. The rear end portion 45r and front end portion 65f contact each other. The first left wall 46 has the rear end portion 46r. The second left wall 66 has the front end portion 66f. The rear end portion 46r and front end portion 66f overlap in the side view of the vehicle. The rear end portion 46r and front end portion 66f contact each other. The first case 41 and second case 61 can therefore conveniently be prevented from shifting in the transverse direction Y relative to each other. For example, the first case 41 can conveniently prevent the second case 61 from moving in the transverse direction Y relative to the first case 41. For example, the second case 61 can conveniently prevent the first case 41 from moving in the transverse direction Y relative to the second case 61. Thus, the relative position between the first case 41 and second case 61 can easily be kept constant.

The first bottom 44 has the rear end portion 44r. The second bottom 64 has the front end portion 64f. The rear end portion 44r and front end portion 64f overlap in the plan view of the vehicle. The rear end portion 44r and front end portion 64f contact each other. The first case 41 and second case 61 can therefore conveniently be prevented from shifting in the up-down direction Z relative to each other. For example, the first case 41 can conveniently prevent the second case 61 from moving in the up-down direction Z relative to the first case 41. For example, the second case 61 can conveniently prevent the first case 41 from moving in the up-down direction Z relative to the second case 61. Thus, the relative position between the first case 41 and second case 61 can be kept constant with increased ease.

### [6] Outline construction of straddled vehicle 1A

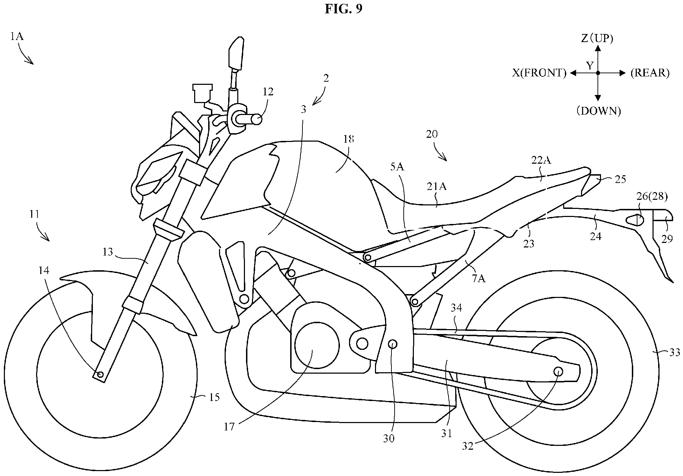

Fig. 9 is a left side view of a straddled vehicle 1A according to a second embodiment. The straddled vehicle 1A according to the second embodiment is, for example, a street type vehicle. The straddled vehicle 1A according to the second embodiment is a model different from the straddled vehicle 1 according to the first embodiment. Components identical to those of the first embodiment are shown with the same signs, and will not particularly be described.

The seat 20 has a front seat 21A and a rear seat 22A. The front seat 21A and rear seat 22A are integrated. The front seat 21A and rear seat 22A are inseparable from each other.

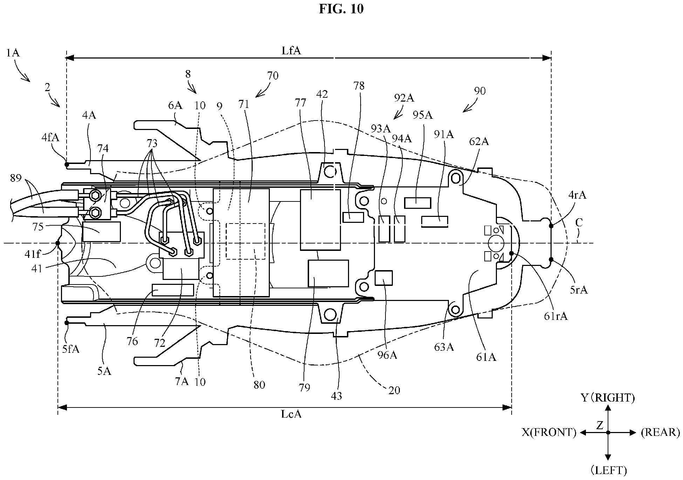

Fig. 10 is a plan view of a rear portion of the straddled vehicle 1A. Fig. 10 shows the seat 20 in a two-dot chain line. Fig. 10 omits the side cover 23 and other elements.

The body frame 2 has a right seat frame 4A and a left seat frame 5A. The right seat frame 4A extends in the longitudinal direction X in the plan view of the vehicle. The left seat frame 5A is located leftward of the right seat frame 4A. The left seat frame 5A extends in the longitudinal direction X in the plan view of the vehicle.

The right seat frame 4A has a front end 4fA and a rear end 4rA. The left seat frame 5A has a front end 5fA and a rear end 5rA. The front ends 4fA and 5fA are connected to the main frame 3, respectively.

The right seat frame 4A and left seat frame 5A are relatively short in the longitudinal direction X. Fig. 10 shows a length LfA. The length LfA is a length in the longitudinal direction X of the right seat frame 4A and left seat frame 5A. More particularly, the length LfA is a distance in the longitudinal direction X between the front ends 4fA and 5fA and the rear ends 4rA and 5rA. The length LfA is smaller than the length Lf of the right seat frame 4 and left seat frame 5 in the first embodiment.

The body frame 2 has a right backstay 6A and a left backstay 7A. The right backstay 6A extends in the longitudinal direction X in the plan view of the vehicle. The left backstay 7A is located leftward of the right backstay 6A. The left backstay 7A extends in the longitudinal direction X in the plan view of the vehicle.

The right backstay 6A is connected to the main frame 3 and right seat frame 4A. The left backstay 7A is connected to the main frame 3 and left seat frame 5A. The right backstay 6A and left backstay 7A support the bracket 8.

The seat 20 is located above the right seat frame 4A and left seat frame 5A. The seat 20 overlaps the right seat frame 4A and left seat frame 5A in the plan view of the vehicle.

The seat 20 is located above the right backstay 6A and left backstay 7A. The seat 20 overlaps the right backstay 6A and left backstay 7A in the plan view of the vehicle.

The seat 20 is located above the bracket 8. The seat 20 overlaps the bracket 8 in the plan view of the vehicle.

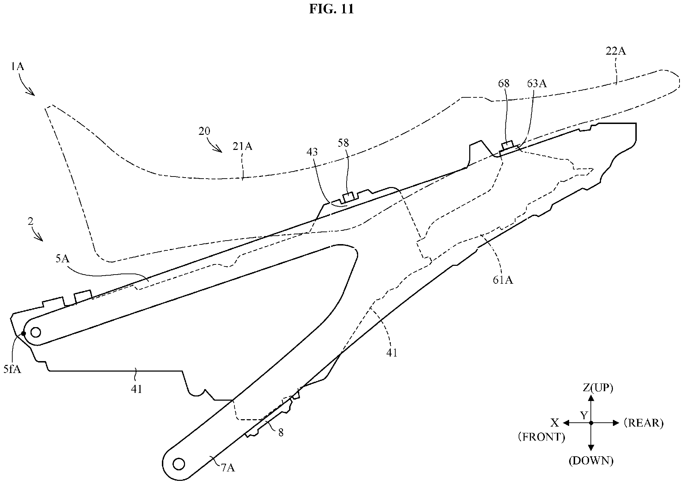

Fig. 11 is a left side view of the rear portion of the straddled vehicle 1A. Fig. 11 shows the seat 20 in a two-dot chain line. Fig. 11 omits the side cover 23 and other elements.

The right seat frame 4A and left seat frame 5 extend rearward and upward in the side view of the vehicle, respectively.

The right backstay 6A is located below the right seat frame 4A in the side view of the vehicle. The left backstay 7A is located below the left seat frame 5A in the side view of the vehicle. The right backstay 6A and left backstay 7A extend rearward and upward in the side view of the vehicle, respectively.

The bracket 8 is located below the right seat frame 4A and left seat frame 5A in the side view of the vehicle.

The seat 20 is located above the right seat frame 4A and left seat frame 5A in the side view of the vehicle.

### [7] First case 41 and second case 61A of straddle vehicle 1A

Reference is made to Fig. 10. The first case 41 is located leftward of the right seat frame 4A, rightward of the left seat frame 5A, and below the seat 20. The straddled vehicle 1A comprises a second case 61A. The second case 61A is located leftward of the right seat frame 4A, rightward of the left seat frame 5A, below the seat 20, and behind the first case 41.

The first case 41 is located leftward of the right backstay 6A, and rightward of the left backstay 7A. The second case 61A is located leftward of the right backstay 6A and rightward of the left backstay 7A.

The first case 41 is located above the bracket 8. The first case 41 overlaps the bracket 8 in the plan view of the vehicle. The second case 61A is located more rearward than the bracket 8. The second case 61A does not overlap the bracket 8 in the plan view of the vehicle.

The first case 41 and second case 61A overlap the seat 20 in the plan view of the vehicle.

The first case 41 of the straddled vehicle 1A has the same shape as the first case 41 of the straddled vehicle 1. The second case 61A of the straddled vehicle 1A has a shape different from the second case 61 of the straddled vehicle 1.

The first case 41 has a front end 41f. The front end 41f of the first case 41 is located, with respect to the longitudinal direction X, in a position corresponding to the front ends 4fA and 5fA or more forward than the front ends 4fA and 5fA.

Fig. 10 shows a length LcA. The length LcA is an entire length in the longitudinal direction X of the first case 41 and second case 61A. More particularly, the length LcA is a distance in the longitudinal direction X between the front end 41f of the first case 41 and a rear end 61rA of the second case 61A. The length LcA is smaller than the length LfA. The length LcA is smaller than the length Lc of the entirety of the first case 41 and second case 61 in the first embodiment.

The first case 41 is supported by the right seat frame 4A and left seat frame 5A. The first right mounting seat 42 is located above the right seat frame 4A. The first right mounting seat 42 is connected to the right seat frame 4A. The first left mounting seat 43 is located above the left seat frame 5A. The first left mounting seat 43 is connected to the left seat frame 5A.

The first case 41 is further supported by the bracket 8.

The second case 61A is supported by the right seat frame 4A and left seat frame 5A. The second case 61A has a second right mounting seat 62A and a second left mounting seat 63A. The second right mounting seat 62A is located more rearward than the first right mounting seat 42. The second right mounting seat 62A is located above the right seat frame 4A. The second right mounting seat 62A is connected to the right seat frame 4A. The second left mounting seat 63A is located more rearward than the first left mounting seat 43. The second left mounting seat 63A is located above the left seat frame 5A. The second left mounting seat 63A is connected to the left seat frame 5A.

Reference is made to Fig. 11. The first case 41 extends rearward from the front end 5fA of the left seat frame 5A in the side view of the vehicle. The first case 41 overlaps the front end 5fA of the left seat frame 5A in the side view of the vehicle. Though not shown, the first case 41 extends rearward from the front end 4fA of the right seat frame 4A in the side view of the vehicle. The first case 41 overlaps the front end 4fA of the right seat frame 4A in the side view of the vehicle.

### [8] First electrical components 70 and second electrical components 90 of straddle vehicle 1A

Reference is made to Fig. 10. The first electrical components 70 in the second embodiment are the same as the first electrical components 70 in the first embodiment. That is, the first electrical components 70 are common to the straddled vehicle 1 and straddled vehicle 1A.

The number of first electrical components 70 and the types of first electrical components 70 are the same in the straddled vehicle 1 and straddled vehicle 1A. Specifically, the first electrical components 70 in the second embodiment comprise the battery 71, hydraulic unit 72, steel pipes 73, joint member 74, main relay 75, fan relay 76, fuse box 77, stop lamp relay 78, starter relay 79, and inertial measurement unit 80. The number of first electrical components 70 in the second embodiment is ten, for example.

The shape of each first electrical component 70 is the same in the straddled vehicle 1 and straddled vehicle 1A. For example, the battery 71 mounted on the straddled vehicle 1A has the same shape as the battery 71 mounted on the straddled vehicle 1.

The arrangement of first electrical components 70 is the same in the straddled vehicle 1 and straddled vehicle 1A. For example, in the straddled vehicle 1A also, the battery 71 and hydraulic unit 72 are arranged to align in the longitudinal direction X in the plan view of the vehicle. Further, the arrangement of each first electrical component 70 relative to the first case 41 is the same in the straddled vehicle 1 and straddled vehicle 1A. Though not shown, in the straddled vehicle 1A also, the battery 71 is located in the middle portion 52 of the first case 41.

The second electrical components 90 in the second embodiment are different from the second electrical components 90 in the first embodiment.

The number of second electrical components 90 and the types of second electrical components 90 are different between the straddled vehicle 1 and straddled vehicle 1A. Specifically, the second electrical components 90 of the straddled vehicle 1A comprise a first connector 91A, a second connector 92A, a third connector 93A, and an on-board diagnostics 96A. The second connector 92A comprises a second right connector 93A and a second left connector 94A. However, the second electrical components 90 of the straddled vehicle 1A do not comprise the heater relay 97 or seat heater switch 98 mounted on the straddled vehicle 1. The number of second electrical components 90 of the straddled vehicle 1A is five. The number of second electrical components 90 of the straddled vehicle 1A is smaller than the number of second electrical components 90 of the straddled vehicle 1.

In the straddled vehicle 1A also, the number of second electrical components 90 is smaller than the number of first electrical components 70.

The shape of each second electrical component 90 is different between the straddled vehicle 1 and straddled vehicle 1A. For example, the first connector 91A has a shape different from the first connector 91. For example, the number of terminals on the first connector 91A is different from the number of terminals on the first connector 91. Similarly, the second connector 92A has a shape different from the second connector 92. The third connector 95A has a shape different from the third connector 95. The on-board diagnostics 96A has a shape different from the on-board diagnostics 96.

The arrangement of each second electrical component 90 is different between the straddled vehicle 1 and straddled vehicle 1A. For example, in the straddled vehicle 1, the on-board diagnostics 96 is located more rearward than the first connector 91. In the straddled vehicle 1A, on the other hand, the on-board diagnostics 96A is located more forward than the first the connector 91A. Further, the arrangement of each second electrical component 90 relative to the second cases 61 and 61A is different between the straddled vehicle 1 and straddled vehicle 1A. For example, in the straddled vehicle 1, the on-board diagnostics 96 is located in the rear portion of the second case 61. In the straddled vehicle 1A, on the other hand, the on-board diagnostics 96A is located in the front portion of the second case 61A.

### [9] Details of first case 41 and second case 61A of straddle vehicle 1A

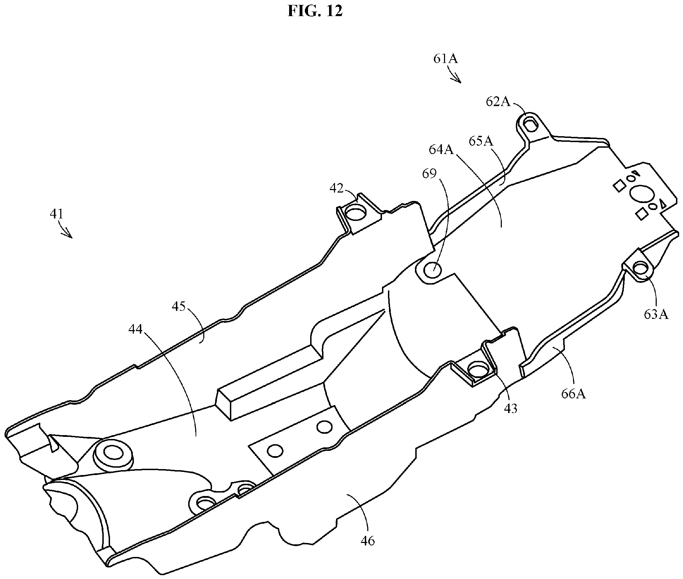

Fig. 12 is a perspective view of the first case 41 and second case 61A. The volume of the first case 41 is larger than the volume of the second case 61A.

The second case 61A has a second bottom 64A, a second right wall 65A, and a second left wall 66A. The volume of the second case 61A corresponds to the volume of a space demarcated by the second bottom 64A, second right wall 65A, and second left wall 66A.

The second bottom 64A is continuous with the first bottom 44. The second right wall 65A is continuous with the first right wall 45. The second left wall 66A is continuous with the first left wall 46.

The second case 61A is an element separate from the first case 41.

The second case 61A is formed integral. The second case 61A is inseparable into a plurality of members.

The second case 61A is made of synthetic resin, for example. The first case 41 and second case 61A are formed separately. The first case 41 and second case 61A are formed using forming dies, respectively. The forming die for forming the second case 61A is different from the forming die for forming the first case 41.

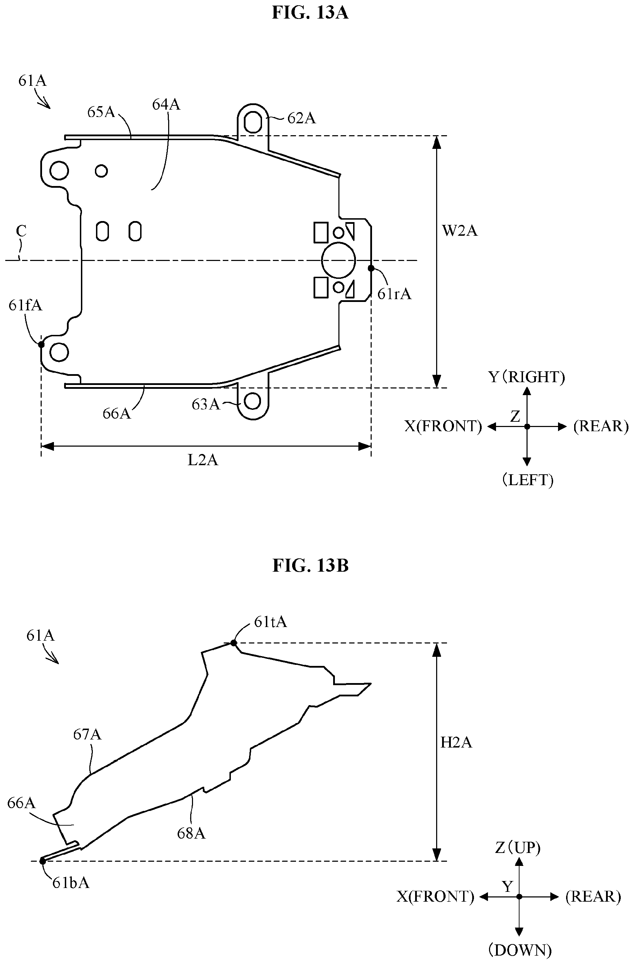

Fig. 13A is a plan view of the second case 61A. The second case 61A has a substantially rectangular shape in the plan view of the vehicle.

The positional relationship of the second bottom 64A, second right wall 65A, and second left wall 66A is similar to the positional relationship of the second bottom 64, second right wall 65, and second left wall 66. The second bottom 64A extends in the longitudinal direction X and transverse direction Y in the plan view of the vehicle. The second right wall 65A extends in the longitudinal direction X in the plan view of the vehicle. The second left wall 66A is located leftward of the second right wall 65A. The second left wall 66A extends in the longitudinal direction X in the plan view of the vehicle.

The second case 61A is relatively short in the longitudinal direction X. Fig. 13A shows a length L2A. The length L2A is a length of the second case 61A in the longitudinal direction X. More particularly, the length L2A is a distance in the longitudinal direction X between a front end 61fA of the second case 61A and the rear end 61rA of the second case 61A. The length L2A is smaller than the length L2 of the second case 61. The length L2A is smaller than the length L1.

Fig. 13A shows a width W2A. The width W2A is a length of the second case 61A in the transverse direction Y. More particularly, the width W2A is a distance in the transverse direction Y between the second right wall 65A and second left wall 66A. The width W2A is substantially equal to the width W1. The width W2A is smaller than the length L2A.

Fig. 13B is a side view of the second case 61A. The second case 61A has an upper edge 67A and a lower edge 68A in the side view of the vehicle. The upper edge 67A extends rearward and upward in the side view of the vehicle. The lower edge 68A extends rearward and upward in the side view of the vehicle.

Fig. 13B shows a height H2A. The height H2A is a length in the up-down direction Z of the second case 61A. More particularly, the height H2A is a distance in the up-down direction Z between an upper end 61tA of the second case 61A and a lower end 61bA of the second case 61A. The height H2A is smaller than the height H1.

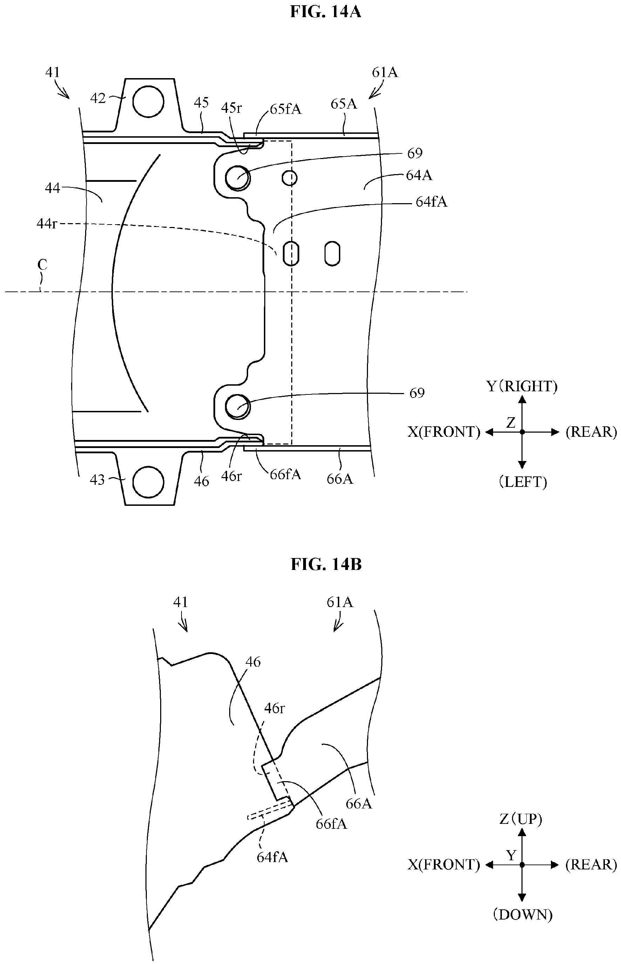

Fig. 14A is a plan view showing a connection between the first case 41 and second case 61A. The first case 41 and second case 61A are connected to be attachable to and detachable from each other.

The first case 41 and second case 61A are joined together by clamps 69.

The first bottom 44 has a rear end portion 44r. The second bottom 64A has a front end portion 64fA. The rear end portion 44r and front end portion 64fA overlap in the plan view of the vehicle. The front end portion 64fA contacts the rear end portion 44r.

Further, the rear end portion 44r and front end portion 64fA are fixed by the clamps 69.

The first right wall 45 has a rear end portion 45r. The second right wall 65A has a front end portion 65fA. The rear end portion 45r and front end portion 65fA are arranged in the transverse direction Y. The front end portion 65fA contacts the rear end portion 45r.

The first left wall 46 has a rear end portion 46r. The second left wall 66A has a front end portion 66fA. The rear end portion 46r and front end portion 66fA are arranged in the transverse direction Y. The front end portion 66fA contacts the rear end portion 46r.

Fig. 14B is a side view showing the connection between the first case 41 and second case 61A. The rear end portion 46r and front end portion 66fA overlap in the side view of the vehicle. Though not shown, the rear end portion 45r and front end portion 65fA overlap in the side view of the vehicle.

### [10] Further advantageous effects

The straddled vehicle 1A in the second embodiment produces the same effects as the straddled vehicle 1 in the first embodiment. For example, the manufacturing cost of the first case 41 and second case 61A can be held down. Further, the arrangement of the first electrical components 70 and second electrical components 90 can be designed efficiently.

Further, the first and second embodiments produce the following effects.

The length LfA is different from the length Lf. Thus, the right seat frame 4A and left seat frame 5A are different in type from the right seat frame 4 and left seat frame 5. Consequently, the straddled vehicle 1A is a model different from the straddled vehicle 1. The shape of the first case 41 is the same in the plural types of the straddled vehicles 1 and 1A. That is, the first case 41 is shared between the plural types, i.e. the straddled vehicles 1 and 1A. The manufacturing cost of the first case 41 can therefore be reduced effectively.

In the side view of the vehicle, the first case 41 extends rearward from the front end 4fA of the right seat frame 4A and the front end 5fA of the left seat frame 5A. The first case 41 can therefore easily be installed leftward of the right seat frame 4 and rightward of the left seat frame 5. Consequently, the first case 41 having the same shape can easily be installed relative to plural types of right seat frames 4 and 4A and left seat frames 5 and 5f having different lengths Lf and LfA.

According to the straddled vehicles 1 and 1A, a switching is made between the second cases 61 and 61A. Specifically, according to the straddled vehicles 1 and 1A, the members appropriate for the first case 41 are switched between the second cases 61 and 61A. The second case 61A has a shape different from the second case 61. The length LcA when the second case 61A is located behind the first case 41 is different from the length Lc when the second case 61 is located behind the first case 41. Thus, the lengths Lc and LcA can be switched by switching the second cases 61 and 61A without changing the first case 41. Consequently, the first case 41 and second cases 61 and 61A are conveniently applicable to the plural types of right seat frames 4 and 4A and left seat frames 5 and 5A having different lengths Lf and LfA. The first case 41 can easily be shared between the plural types of straddled vehicles 1 and 1A.

The volume of the second case 61 is smaller than the volume of the first case 41. The volume of the second case 61A is also smaller than the volume of the first case 41. So, even when preparing plural types of second cases 61 and 61A having different shapes, it is possible to keep down the manufacturing cost of the second cases 61 and 61A not to become excessively high. Thus, the overall manufacturing cost of the first case 41 and second cases 61 and 61A can be kept down conveniently.

The arrangement of the first electrical components 70 is common to the straddled vehicles 1 and 1A. Consequently, the arrangement of the first electrical components 70 in the straddled vehicle 1 can be applied as arrangement of the first electrical components 70 in the straddled vehicle 1A. It is therefore sufficient to design once the arrangement of the first electrical components 70 for the straddled vehicles 1 and 1A. For example, when the arrangement of the first electrical components 70 is designed for the straddled vehicle 1, it is not necessary to design the arrangement of the first electrical component 70 for the straddled vehicle 1A. Consequently, an efficient laborsaving can be realized in the operation to design the arrangement of the first electrical components 70.

There is a difference in the arrangement of the second electrical components 90 between the straddled vehicles 1 and 1A. As noted above, the arrangement of the first electrical components 70 in the straddled vehicle 1 can be applied as arrangement of the first electrical components 70 in the straddled vehicle 1A. Thus, for the straddled vehicles 1 and 1A, it is sufficient to design twice the arrangement of only the second electrical components 90. For example, when the arrangements of the first electrical components 70 and second electrical components 90 have been designed for the straddled vehicle 1, it is sufficient to design the arrangement of only the second electrical components 70 for the straddled vehicle 1A. The arrangement of the second electrical components 90 can therefore be designed easily.

Consequently, it is possible to reduce effectively the cost of designing arrangements of the first electrical components 70 and second electrical components 90 for the plural types of straddled vehicles 1 and 1A.

The shape of each first electrical component 70 is common to the straddled vehicles 1 and 1A. Therefore, the cost of designing the arrangement of the first electrical components 70 can be reduced with increased effect.

The shapes of the second electrical components 90 are different between the straddled vehicles 1 and 1A. Here, the second electrical components 90 are stored in the second cases 61 and 61A. Therefore, the arrangement of the second electrical components 90 is designed for each of the plural types of the straddled vehicles 1 and 1A. Consequently, even when the shapes of the second electrical components 90 are different between the straddled vehicles 1 and 1A, the arrangement of the second electrical components 90 in the straddled vehicle 1 can be optimized, and the arrangement of the second electrical components 90 in the straddled vehicle 1A can be optimized. Thus, when the shapes of the second electrical components 90 are different between the straddled vehicles 1 and 1A, there is an important technical significance in storing the second electrical components 90 in the second cases 61 and 61A. In other words, when the shapes of the second electrical components 90 are different between the straddled vehicles 1 and 1A, there is all the more technical significance in designing an arrangement of only the second electrical components 90 for each of the straddled vehicles 1 and 1A.

The number of second electrical components 90 differs between the straddled vehicles 1 and 1A. Here, the second electrical components 90 are stored in the second cases 61 and 61A. Therefore, even when the number of second electrical components 90 differs between the straddled vehicles 1 and 1A, the arrangement of the second electrical components 90 in the straddled vehicle 1 can be optimized, and the arrangement of the second electrical components 90 in the straddled vehicle 1A can be optimized. Thus, when the number of second electrical components 90 differs between the straddled vehicles 1 and 1A, there is all the more technical significance in storing the second electrical components 90 in the second cases 61 and 61A.

The types of the second electrical components 90 differ between the straddled vehicles 1 and 1A. Here, the second electrical components 90 are stored in the second cases 61 and 61A. Therefore, even when the types of the second electrical components 90 differ between the straddled vehicles 1 and 1A, the arrangement of the second electrical components 90 in the straddled vehicle 1 can be optimized, and the arrangement of the second electrical components 90 in the straddled vehicle 1A can be optimized. Thus, when the types of the second electrical component 90 differ between the straddled vehicles 1 and 1A, there is all the more technical significance in storing the second electrical components 90 in the second cases 61 and 61A.

### [11] Other embodiments

This invention is not limited to the foregoing embodiments, but may be modified as follows:
(1) In the first embodiment, the length L2 is smaller than the length L1. In the second embodiment, the length L2A is smaller than the length L1. The invention is not limited to this. For example, the length L2 may correspond to the length L1. For example, the length L2A may correspond to the length L1.
(2) The first and second embodiments describe examples of the first electrical components 70. The invention is not limited to this. The makeup of the first electrical components 70 may be changed as appropriate. For example, the first electrical components 70 do not need to comprise the main relay 75. Similarly, the first and second embodiments describe examples of the second electrical components 90. This invention is not limited to this. The makeup of the second electrical components 90 may be changed as appropriate.
(3) The first case 41 may store only the first electrical components 70, for example. Alternatively, in addition to the first electrical components 70, the first case 41 may store articles other than the first electrical components 70. For example, in addition to the first electrical components 70, the first case 41 may store tools. For example, in addition to the first electrical components 70, the first case 41 may store baggage of the driver or passenger. At least one of the second cases 61 and 61A may store only the second electrical components 90, for example. Alternatively, in addition to the second electrical components 90, at least one of the second cases 61 and 61A may store articles other than the second electrical components 90. For example, in addition to the second electrical components 90, at least one of the second cases 61 and 61A may store tools. For example, in addition to the second electrical components 90, at least one of the second cases 61 and 61A may store baggage of the driver or passenger.
(4) In the first and second embodiments, the number of first electrical components 70 is the same in the straddled vehicles 1 and 1A. The invention is not limited to this. For example, the number of first electrical components 70 may be slightly different between the straddled vehicles 1 and 1A. In the first and second embodiments, the types of the first electrical components 70 are the same in the straddled vehicles 1 and 1A. The invention is not limited to this. For example, the types of the first electrical components 70 may be slightly different between the straddled vehicles 1 and 1A. In the first and second embodiments, the shape of each first electrical component 70 is the same in the straddled vehicles 1 and 1A. The invention is not limited to this. For example, at least one of the first electrical components 70 may be different in shape between the straddled vehicles 1 and 1A. In the first and second embodiments, the arrangement of the first electrical components 70 is the same in the straddled vehicles 1 and 1A. The invention is not limited to this. For example, the arrangement of the first electrical components 70 may be slightly different between the straddled vehicles 1 and 1A.
(5) In the first and second embodiments, the number of second electrical components 90 is different between the straddled vehicles 1 and 1A. The invention is not limited to this. For example, the number of second electrical components 90 may be the same in the straddled vehicles 1 and 1A. In the first and second embodiments, the types of the second electrical components 90 are different between the straddled vehicles 1 and 1A. The invention is not limited to this. For example, the types of the second electrical components 90 may be the same in the straddled vehicles 1 and 1A. In the first and second embodiments, the shape of each second electrical component 90 is different between the straddled vehicles 1 and 1A. The invention is not limited to this. For example, at least one of the second electrical components 90 may have the same shape in the straddled vehicles 1 and 1A. In the first and second embodiments, the arrangement of the second electrical components 90 are different between the straddled vehicles 1 and 1A. The invention is not limited to this. For example, the arrangement of the second electrical components 90 may be the same in the straddled vehicles 1 and 1A.
(6) In the first and second embodiments, the straddled vehicles 1 and 1A have been illustrated as examples of street type vehicles. The invention is not limited to this. At least one of the straddled vehicles 1 and 1A may be changed to vehicles of other types, such as the sport type or a vehicle for irregular grounds (ALL-TERRAIN VEHICLE).
(7) In the first and second embodiments, the number of front wheels 15 of the straddled vehicle 1 or 1A is one. The invention is not limited to this. The number of front wheels 15 of the straddled vehicle 1 or 1A may be changed to two. In the foregoing embodiments, the number of rear wheels 33 of the straddled vehicle 1 or 1A is one. The invention is not limited to this. The number of rear wheels 33 of the straddled vehicle 1 or 1A may be changed to two.
(8) In the first and second embodiments, the straddled vehicles 1 and 1A have the engine (internal combustion engine) 17. The invention is not limited to this. For example, at least one of the straddled vehicles 1 and 1A may have an electric motor in addition to the engine 17 as power source. For example, at least one of the straddled vehicles 1 and 1A may have an electric motor as power source instead of the engine 17.
(9) The first and second embodiments and each of the modified embodiments described in paragraphs (1) to (8) above may be further varied as appropriate by replacing or combining their constructions with the constructions of the other modified embodiments.

As each of constituent elements recited in the claims, various other elements having configurations or functions described in the claims can be also used.

The scope of the present invention and/or disclosure, therefore, is to be determined solely by the following claims.

It will be appreciated that the term straddled vehicle or motor vehicle used herein, and as used in the art, is meant to include at least the following terms used in the art:
straddled vehicle or motor vehicle, straddle-type vehicle or motor vehicle, saddle-straddling (type) vehicle or motor vehicle, and includes: motorcycles, and motorbikes as well as tricycles, quad bikes, All Terrain Vehicles (ATVs), scooters, mopeds and snowmobiles.

## Claims

1. A straddled vehicle (1) comprising:
a right seat frame (4, 4A) extending in a vehicle longitudinal direction (X) in a plan view of the vehicle;
a left seat frame (5, 5A) disposed leftward of the right seat frame, and extending in the vehicle longitudinal direction in the plan view of the vehicle;
a seat (20) disposed above the right seat frame and the left seat frame;
a first case (41) disposed leftward of the right seat frame, rightward of the left seat frame, and below the seat;
a second case (61, 61A) separate from the first case, and disposed leftward of the right seat frame, rightward of the left seat frame, below the seat, and
a plurality of first electrical components (70) stored in the first case; and
a plurality of second electrical components (90) stored in the second case;
wherein
the first electrical components comprise:
a battery (71); and
a hydraulic unit (72); and
the second electrical components comprise:
a first connector (91, 91A) for connecting wiring of a taillight (25); and
the second case is smaller in volume than the first case, **characterized in that** the second case (61, 61A) is disposed behind the first case such that a length (L1) that is a distance in the longitudinal direction (X) of the straddled vehicle (1) from a front end (41f) of the first case (41) to a rear end (41r) of the first case (41) is smaller than a length (Lc) that is a distance in the longitudinal direction (X) of the straddled vehicle (1) from the front end (41f) of the first case (41) to a rear end (61 r, 61rA) of the second case (61, 61A).

2. The straddled vehicle according to claim 1, wherein the second case has a length (H2, H2A) in a vehicle's up-down direction (Z) smaller than a length (H1) in the vehicle's up-down direction of the first case.

3. The straddled vehicle according to claim 1 or 2, wherein the second case has a length (L2, L2A) in the vehicle's longitudinal direction corresponding to or smaller than the length (L1) in the vehicle's longitudinal direction of the first case.

4. The straddled vehicle according to any one of claims 1 to 3, wherein the battery and the hydraulic unit are arranged to align in the vehicle's longitudinal direction in the plan view of the vehicle.

5. The straddled vehicle according to any one of claims 1 to 4, wherein:
the first case is divided into;
a front portion (51);
a middle portion (52) located behind the front portion; and
a rear portion (53) located behind the middle portion;
the middle portion has a depth (D2) larger than a depth (D1) of the front portion and a depth (D3) of the rear portion; and
the battery is stored in the middle portion.

6. The straddled vehicle according to any one of claims 1 to 5, comprising a bracket (8) disposed below the first case and in contact with the first case;
wherein the bracket overlaps the battery in the plan view of the vehicle.

7. The straddled vehicle according to any one of claims 1 to 6, wherein the first electrical components further comprise:
steel pipes (73) connected to the hydraulic unit; and
a joint member (74) connected to the steel pipes.

8. The straddled vehicle according to any one of claims 1 to 7, wherein the second electrical components further comprise:
a second connector (92, 92A) for connecting wiring of a rear flasher light (26); and
a third connector (95, 95A) for connecting wiring of a license light (29).

9. The straddled vehicle according to any one of claims 1 to 8, wherein the first electrical components is larger in number than the second electrical components.

10. The straddled vehicle according to any one of claims 1 to 9, wherein the first case, in a side view of the vehicle, extends rearward from a front end (4f, 4fA) of the right seat frame and a front end (5f, 5fA) of the left seat frame.

11. The straddled vehicle according to any one of claims 1 to 10, wherein:
the first case comprises:
a first right mounting seat (42) connected to the right seat frame; and
a first left mounting seat (43) connected to the left seat frame; and
the second case comprises:
a second right mounting seat (62, 62A) disposed more rearward than the first right mounting seat, and connected to the right seat frame; and
a second left mounting seat (63, 63A) disposed more rearward than the first left mounting seat, and connected to the left seat frame.

12. The straddled vehicle according to claim 11, wherein:
the first right mounting seat and the second right mounting seat are located above the right seat frame, respectively; and
the first left mounting seat and the second left mounting seat are located above the left seat frame, respectively.

13. The straddled vehicle according to any one of claims 1 to 12, wherein the first case and the second case are separably connected to each other.

14. The straddled vehicle according to any one of claims 1 to 13, wherein:
the first case has a first bottom (44); the second case has a second bottom (64, 64A); and
the second bottom is continuous with the first bottom.

15. The straddled vehicle according to any one of claims 1 to 14, wherein:
the first case comprises:
a first right wall (45) extending in the vehicle's longitudinal direction (X) in the plan view of the vehicle; and
a first left wall (46) disposed leftward of the first right wall and extending in the vehicle's longitudinal direction in the plan view of the vehicle; and
the second case (61, 61A) comprises:
a second right wall (65, 65A) extending in the vehicle's longitudinal direction in the plan view of the vehicle; and
a second left wall (66, 66A) disposed leftward of the second right wall and extending in the vehicle's longitudinal direction (X) in the plan view of the vehicle;
the first right wall has a rear end portion (45r);
the first left wall has a rear end portion (46r);
the second right wall has a front end portion (65f, 65fA);
the second left wall has a front end portion (66f, 66fA);
the rear end portion of the first right wall and the front end portion of the second right wall overlap in the side view of the vehicle;
the rear end portion of the first right wall and the front end portion of the second right wall contact each other;
the rear end portion (46r) of the first left wall and the front end portion of the second left wall overlap in the side view of the vehicle; and
the rear end portion (46r) of the first left wall and the front end portion of the second left wall contact each other.

## Patentansprüche

1. Grätschsitzfahrzeug (1), das Folgendes umfasst:
einen rechten Sitzrahmen (4, 4A), der sich in einer Draufsicht des Fahrzeugs in einer Fahrzeuglängsrichtung (X) erstreckt;
einen linken Sitzrahmen (5, 5A), der links von dem rechten Sitzrahmen angeordnet ist und sich in der Draufsicht des Fahrzeugs in der Fahrzeuglängsrichtung erstreckt;
einen Sitz (20), der oberhalb des rechten Sitzrahmens und des linken Sitzrahmens angeordnet ist;
ein erstes Gehäuse (41), das links von dem rechten Sitzrahmen, rechts von dem linken Sitzrahmen und unterhalb des Sitzes angeordnet ist;
ein zweites Gehäuse (61, 61A), das von dem ersten Gehäuse getrennt und links von dem rechten Sitzrahmen, rechts von dem linken Sitzrahmen, unterhalb des Sitzes, angeordnet ist, und
eine Vielzahl von ersten elektrischen Bauteilen (70), die in dem ersten Gehäuse verstaut sind; und
eine Vielzahl von zweiten elektrischen Bauteilen (90), die in dem zweiten Gehäuse verstaut sind;
wobei
die ersten elektrischen Bauteile Folgendes umfassen:
eine Batterie (71); und
eine Hydraulikeinheit (72); und
die zweiten elektrischen Bauteile Folgendes umfassen:
einen ersten Verbinder (91, 91A) zum Verbinden einer Verkabelung einer Rückleuchte (25); und
das zweite Gehäuse im Volumen kleiner ist als das erste Gehäuse, **dadurch gekennzeichnet, dass** das zweite Gehäuse (61, 61A) derart hinter dem ersten Gehäuse angeordnet ist, dass eine Länge (L1), die eine Entfernung in der Längsrichtung (X) des Grätschsitzfahrzeugs (1) von einem vorderen Ende (41f) des ersten Gehäuses (41) bis zu einem hinteren Ende (41r) des ersten Gehäuses (41) ist, kleiner ist als eine Länge (Lc), die eine Entfernung in der Längsrichtung (X) des Grätschsitzfahrzeugs (1) von dem vorderen Ende (41f) des ersten Gehäuses (41) bis zu einem hinteren Ende (61r, 61rA) des zweiten Gehäuses (61, 61A) ist.

2. Grätschsitzfahrzeug nach Anspruch 1, wobei das zweite Gehäuse eine Länge (H2, H2A) in einer Aufwärts-Abwärts-Richtung (Z) des Fahrzeugs, kleiner als eine Länge (H1) des ersten Gehäuses in der Aufwärts-Abwärts-Richtung des Fahrzeugs, aufweist.

3. Grätschsitzfahrzeug nach Anspruch 1 oder 2, wobei das zweite Gehäuse eine Länge (L2, L2A) in der Längsrichtung des Fahrzeugs aufweist, die der Länge (L1) des ersten Gehäuses in der Längsrichtung des Fahrzeugs entspricht oder kleiner ist als dieselbe.

4. Grätschsitzfahrzeug nach einem der Ansprüche 1 bis 3, wobei die Batterie und die Hydraulikeinheit so angeordnet sind, dass sie in der Draufsicht des Fahrzeugs in der Längsrichtung das Fahrzeugs fluchten.

5. Grätschsitzfahrzeug nach einem der Ansprüche 1 bis 4, wobei:
das erste Gehäuse in Folgendes unterteilt ist:
einen vorderen Abschnitt (51),
einen mittleren Abschnitt (52), der sich hinter dem vorderen Abschnitt befindet; und
einen hinteren Abschnitt (53), der sich hinter dem mittleren Abschnittbefindet;
der mittlere Abschnitt eine Tiefe (D2), größer als eine Tiefe (D1) des vorderen Abschnitts und eine Tiefe (D3) des hinteren Abschnitts, aufweist; und
die Batterie in dem mittleren Abschnitt verstaut ist.

6. Grätschsitzfahrzeug nach einem der Ansprüche 1 bis 5, das eine Halterung (8) umfasst, die unterhalb des ersten Gehäuses und in Berührung mit dem ersten Gehäuse angeordnet ist;
wobei die Halterung die Batterie in der Draufsicht des Fahrzeugs überlappt.

7. Grätschsitzfahrzeug nach einem der Ansprüche 1 bis 6, wobei die ersten elektrischen Bauteile ferner Folgendes umfassen:
Stahlrohre (73), die mit der Hydraulikeinheit verbunden sind; und
ein Verbindungselement (74), das mit den Stahlrohren verbunden ist.

8. Grätschsitzfahrzeug nach einem der Ansprüche 1 bis 7, wobei die zweiten elektrischen Bauteile ferner Folgendes umfassen:
einen zweiten Verbinder (92, 92A) zum Verbinden einer Verkabelung einer hinteren Blinkleuchte (26); und
einen dritten Verbinder (95, 95A) zum Verbinden einer Verkabelung einer Kennzeichenleuchte (29).

9. Grätschsitzfahrzeug nach einem der Ansprüche 1 bis 8, wobei die ersten elektrischen Bauteile in der Anzahl größer sind als die zweiten elektrischen Bauteile.

10. Grätschsitzfahrzeug nach einem der Ansprüche 1 bis 9, wobei sich das erste Gehäuse, in einer Seitenansicht des Fahrzeugs, von einem vorderen Ende (4f, 4fA) des rechten Sitzrahmens und einem vorderen Ende (5f, 5fA) des linken Sitzrahmens aus nach hinten erstreckt.

11. Grätschsitzfahrzeug nach einem der Ansprüche 1 bis 10, wobei:
das erste Gehäuse Folgendes umfasst:
eine erste rechte Montageauflagefläche (42), die mit dem rechten Sitzrahmen verbunden ist; und
eine erste linke Montageauflagefläche (43), die mit dem linken Sitzrahmen verbunden ist; und
das zweite Gehäuse Folgendes umfasst:
eine zweite rechte Montageauflagefläche (62, 62A), die weiter hinten als die erste rechte Montageauflagefläche angeordnet und mit dem rechten Sitzrahmen verbunden ist; und
eine zweite linke Montageauflagefläche (63, 63A), die weiter hinten als die erste linke Montageauflagefläche angeordnet und mit dem linken Sitzrahmen verbunden ist.

12. Grätschsitzfahrzeug nach Anspruch 11, wobei:
sich die erste rechte Montageauflagefläche und die zweite rechte Montageauflagefläche jeweils oberhalb des rechten Sitzrahmens befinden; und
sich die erste linke Montageauflagefläche und die zweite linke Montageauflagefläche jeweils oberhalb des linken Sitzrahmens befinden.

13. Grätschsitzfahrzeug nach einem der Ansprüche 1 bis 12, wobei das erste Gehäuse und das zweite Gehäuse trennbar miteinander verbunden sind.

14. Grätschsitzfahrzeug nach einem der Ansprüche 1 bis 13, wobei:
das erste Gehäuse einen ersten Boden (44) aufweist; das zweite Gehäuse einen zweiten Boden (64, 64A) aufweist; und
der zweite Boden mit dem ersten Boden durchgehend ist.

15. Grätschsitzfahrzeug nach einem der Ansprüche 1 bis 14, wobei:
das erste Gehäuse Folgendes umfasst:
eine erste rechte Wand (45), die sich in der Draufsicht des Fahrzeugs in der Längsrichtung (X) des Fahrzeugs erstreckt; und
eine erste linke Wand (46), die links von der ersten rechten Wand angeordnet ist und sich in der Draufsicht des Fahrzeugs in der Längsrichtung des Fahrzeugs erstreckt; und
das zweite Gehäuse (61, 61A) Folgendes umfasst:
eine zweite rechte Wand (65, 65A), die sich in der Draufsicht des Fahrzeugs in der Längsrichtung des Fahrzeugs erstreckt; und
eine zweite linke Wand (66, 66A), die links von der zweiten rechten Wand angeordnet ist und sich in der Draufsicht des Fahrzeugs in der Längsrichtung (X) des Fahrzeugs erstreckt;
die erste rechte Wand einen hinteren Endabschnitt (45r) aufweist;
die erste linke Wand einen hinteren Endabschnitt (46r) aufweist;
die zweite rechte Wand einen vorderen Endabschnitt (65f, 65fA) aufweist;
die zweite linke Wand einen vorderen Endabschnitt (66f, 66fA) aufweist;
der hintere Endabschnitt der ersten rechten Wand und der vordere Endabschnitt der zweiten rechten Wand sich in der Seitenansicht des Fahrzeugs überlappen;
der hintere Endabschnitt der ersten rechten Wand und der vordere Endabschnitt der zweiten rechten Wand einander berühren;
der hintere Endabschnitt (46r) der ersten linken Wand und der vordere Endabschnitt der zweiten linken Wand sich in der Seitenansicht des Fahrzeugs überlappen; und
der hintere Endabschnitt (46r) der ersten linken Wand und der vordere Endabschnitt der zweiten linken Wand einander berühren.

## Revendications

1. Véhicule à enfourcher (1) comprenant :
un cadre de siège droit (4, 4A) s'étendant dans une direction longitudinale du véhicule (X) dans une vue de dessus du véhicule ;
un cadre de siège gauche (5, 5A) disposé à gauche du cadre de siège droit, et s'étendant dans la direction longitudinale du véhicule dans la vue de dessus du véhicule ;
un siège (20) disposé au-dessus du cadre droit de siège et du cadre gauche de siège ;
un premier boîtier (41) disposé à gauche du cadre droit de siège, à droite du cadre gauche de siège, et en dessous du siège ;
un deuxième boîtier (61, 61A) séparé du premier boîtier, et disposé à gauche du cadre droit de siège, à droite du cadre gauche de siège, et en dessous du siège, et
une pluralité de premiers composants électriques (70) stockés dans le premier boîtier ; et
une pluralité de deuxièmes composants électriques (90) stockés dans le deuxième boîtier ;
dans lequel
les premiers composants électriques comprennent :
une batterie (71) ; et
une unité hydraulique (72) ; et
les deuxièmes composants électriques comprennent :
un premier connecteur (91, 91A) pour connecter un câblage d'un feu arrière (25) ; et
le deuxième boîtier est inférieur en volume au premier boîtier, **caractérisé en ce que** le deuxième boîtier (61, 61A) est disposé derrière le premier boîtier de sorte qu'une longueur (L1) qui est une distance dans la direction longitudinale (X) du véhicule à enfourcher (1) d'une extrémité avant (41f) du premier boîtier (41) à une extrémité arrière (41r) du premier boîtier (41) est inférieure à une longueur (Lc) qui est une distance dans la direction longitudinale (X) du véhicule à enfourcher (1) de l'extrémité avant (41f) du premier boîtier (41) à une extrémité arrière (61r, 61rA) du deuxième boîtier (61, 61A).

2. Véhicule à enfourcher selon la revendication 1, dans lequel le deuxième boîtier a une longueur (H2, H2A) dans une direction de haut en bas du véhicule (Z) inférieure à une longueur (H1) dans la direction de haut en bas du véhicule du premier boîtier.

3. Véhicule à enfourcher selon la revendication 1 ou 2, dans lequel le deuxième boîtier a une longueur (L2, L2A) dans la direction longitudinale du véhicule correspondant à ou inférieure à la longueur (L1) dans la direction longitudinale du véhicule du premier boîtier.

4. Véhicule à enfourcher selon l'une quelconque des revendications 1 à 3, dans lequel la batterie et l'unité hydraulique sont agencées de sorte à être alignées dans la direction longitudinale du véhicule dans la vue de dessus du véhicule.

5. Véhicule à enfourcher selon l'une quelconque des revendications 1 à 4, dans lequel :
le premier boîtier est divisé en :
une partie avant (51) ;
une partie centrale (52) située derrière la partie avant ; et
une partie arrière (53) située derrière la partie centrale ;
la partie centrale a une profondeur (D2) supérieure à une profondeur (D1) de la partie avant et une profondeur (D3) de la partie arrière ; et
la batterie est stockée dans la partie centrale.

6. Véhicule à enfourcher selon l'une quelconque des revendications 1 à 5, comprenant un support (8) disposé en dessous du premier boîtier et en contact avec le premier boîtier ;
dans lequel le support chevauche la batterie dans la vue de dessus du véhicule.

7. Véhicule à enfourcher selon l'une quelconque des revendications 1 à 6, dans lequel les premiers composants électriques comprennent en outre :
des tubes en acier (73) connectés à l'unité hydraulique ; et
un élément de jonction (74) connecté aux tubes en acier.

8. Véhicule à enfourcher selon l'une quelconque des revendications 1 à 7, dans lequel les deuxièmes composants électriques comprennent en outre :
un deuxième connecteur (92, 92A) pour connecter un câblage d'un feu clignotant arrière (26) ; et
un troisième connecteur (95, 95A) pour connecter un câblage d'un feu de plaque d'immatriculation (29).

9. Véhicule à enfourcher selon l'une quelconque des revendications 1 à 8, dans lequel les premiers composants électriques sont plus grands en nombre que les deuxièmes composants électriques.

10. Véhicule à enfourcher selon l'une quelconque des revendications 1 à 9, dans lequel le premier boîtier, dans une vue latérale du véhicule, s'étend vers l'arrière à partir d'une extrémité avant (4f, 4fA) du cadre de siège droit et d'une extrémité avant (5f, 5fA) du cadre de siège gauche.

11. Véhicule à enfourcher selon l'une quelconque des revendications 1 à 10, dans lequel le premier boîtier comprend :
une première surface d'appui de montage droite (42) connectée au cadre de siège droit ; et
une première surface d'appui de montage gauche (43) connectée au cadre de siège gauche ; et
le deuxième boîtier comprend :
une deuxième surface d'appui de montage droite (62, 62A) disposée plus vers l'arrière que la première surface d'appui de montage droite, et connectée au cadre de siège droit ; et
une deuxième surface d'appui de montage gauche (63, 63A) disposée plus vers l'arrière que la première surface d'appui de montage gauche, et connectée au cadre de siège gauche.

12. Véhicule à enfourcher selon la revendication 11, dans lequel :
la première surface d'appui de montage droite et la deuxième surface d'appui de montage droite sont situées respectivement au-dessus du cadre de siège droit ; et
la première surface d'appui de montage gauche et la deuxième surface d'appui de montage gauche sont situées respectivement au-dessus du cadre de siège gauche.

13. Véhicule à enfourcher selon l'une quelconque des revendications 1 à 12, dans lequel le premier boîtier et le deuxième boîtier sont connectés de manière séparable l'un à l'autre.

14. Véhicule à enfourcher selon l'une quelconque des revendications 1 à 13, dans lequel :
le premier boîtier comporte un premier fond (44) ; le deuxième boîtier comporte un deuxième fond (64, 64A) ; et
le deuxième fond est continu avec le premier fond.

15. Véhicule à enfourcher selon l'une quelconque des revendications 1 à 14, dans lequel :
le premier boîtier comprend :
une première paroi droite (45) s'étendant dans la direction longitudinale du véhicule (X) dans la vue de dessus du véhicule ; et
une première paroi gauche (46) disposée à gauche de la première paroi droite et s'étendant dans la direction longitudinale du véhicule dans la vue de dessus du véhicule ; et
le deuxième boîtier (61, 61A) comprend :
une deuxième paroi droite (65, 65A) s'étendant dans la direction longitudinale du véhicule dans la vue de dessus du véhicule ; et
une deuxième paroi gauche (66, 66A) disposée à gauche de la deuxième paroi droite et s'étendant dans la direction longitudinale du véhicule (X) dans la vue de dessus du véhicule ;
la première paroi droite comporte une partie d'extrémité arrière (45r) ;
la première paroi gauche comporte une partie d'extrémité arrière (46r) ;
la deuxième paroi droite comporte une partie d'extrémité avant (65f, 65fA) ;
la deuxième paroi gauche comporte une partie d'extrémité avant (66f, 66fA) ;
la partie d'extrémité arrière de la première paroi droite et la partie d'extrémité avant de la deuxième paroi droite se chevauchent dans la vue latérale du véhicule ;
la partie d'extrémité arrière de la première paroi droite et la partie d'extrémité avant de la deuxième paroi droite entrent en contact l'une avec l'autre ;
la partie d'extrémité arrière (46r) de la première paroi gauche et la partie d'extrémité avant de la deuxième paroi gauche se chevauchent dans la vue latérale du véhicule ; et
la partie d'extrémité arrière (46r) de la première paroi gauche et la partie d'extrémité avant de la deuxième paroi gauche entrent en contact l'une avec l'autre.
